# NEW EUROPEAN PATENT SPECIFICATION

(11) **EP 3 760 064 B2**
(45) Date of publication and mention of the opposition decision: **30.09.2026**
(45) Mention of the grant of the patent: 18.05.2022
(21) Application number: 19191184.1
(22) Date of filing: 12.08.2019
(51) Int. Cl.: H05B 6/06, H05B 6/10, A24F 40/57, A24F 40/465

(54) **AEROSOL-GENERATING DEVICE COMPRISING AN INDUCTIVE HEATING ARRANGEMENT COMPRISING FIRST AND SECOND INDUCTOR COILS CONTROLLED THROUGH PULSE WIDTH MODULATION (PWM)**
AEROSOLERZEUGUNGSVORRICHTUNG MIT EINER INDUKTIVEN HEIZANORDNUNG MIT ERSTEN UND ZWEITEN INDUKTORSPULEN
DISPOSITIF DE GÉNÉRATION D'AÉROSOL COMPRENANT UN AGENCEMENT DE CHAUFFAGE PAR INDUCTION COMPRENANT UNE PREMIÈRE ET UNE SECONDE BOBINES D'INDUCTION

(30) Priority: 04.07.2019 EP 19184554
(43) Date of publication of application: 06.01.2021
(73) Proprietor: Philip Morris Products S.A., 2000 Neuchâtel (CH)
(72) Inventor: COURBAT, Jerome Christian, 2000 Neuchâtel (CH); MIRONOV, Oleg, 2000 Neuchâtel (CH); STURA, Enrico, 2000 Neuchâtel (CH)
(74) Representative: DREISS Patentanwälte PartG mbB

(56) References cited:
- EP-A1- 2 327 318
- EP-A1- 3 082 484
- WO-A1-2013/034460
- WO-A1-2013/060781
- WO-A1-2017/001820
- WO-A1-2017/068098
- WO-A1-2018/019855
- WO-A1-2018/073376
- WO-A1-2018/092040
- WO-A1-2019/002613
- WO-A1-2019/030353
- WO-A1-2019/030366
- WO-A1-2019/122880
- WO-A1-2020/182760
- WO-A2-2015/038981
- CN-A- 104 095 291
- US-A1- 2017 042 232

## Description

The present disclosure relates to an aerosol-generating device having an inductive heating arrangement, a method of controlling an aerosol-generating device having an inductive heating arrangement, and an aerosol-generating system comprising an aerosol-generating device having an inductive heating arrangement.

CN 104 095 291 B describes a tobacco smoking system comprising an induction heating arrangement. In one embodiment the smoking system comprises first, second and third induction heaters arranged co-axially along the length of a heating chamber. The heating chamber is defined by a susceptor comprising a base, a tubular outer part and central inner part. The first induction heater includes an induction coil and a temperature control circuit, the temperature control circuit comprising a power supply, a controller and a switch arranged in series with the induction coil. The second and third induction heaters each have the same construction as the first induction heater.

EP 3 082 484 B1 describes an aerosol-generating system comprising at least one heater and at least one further heater. The aerosol-generating system also comprises a controller configured to provide power to the at least one heater and the at least one further heater with different duty cycles to enable differential heating of a delivery enhancing compound and a volatile liquid of an aerosol-generating article.

WO 2019/030366 A1 discloses an aerosol-generating device comprising an inductive heating arrangement configured to heat an aerosol-forming substrate. The inductive heating arrangement comprising a susceptor arrangement that is heatable by penetration with a varying magnetic field to heat the aerosol-forming substrate.

A number of electrically-operated aerosol-generating systems in which an aerosol-generating device having an electric heater is used to heat an aerosol-forming substrate, such as a tobacco plug, have been proposed in the art. One aim of such aerosol-generating systems is to reduce known harmful smoke constituents of the type produced by the combustion and pyrolytic degradation of tobacco in conventional cigarettes. Typically, the aerosol-generating substrate is provided as part of an aerosol-generating article which is inserted into a cavity in the aerosol-generating device. In some known systems, to heat the aerosol-forming substrate to a temperature at which it is capable of releasing volatile components that can form an aerosol, a resistive heating element such as a heating blade is inserted into or around the aerosol-forming substrate when the article is received in the aerosol-generating device. In other aerosol-generating systems, an inductive heater is used rather than a resistive heating element. The inductive heater typically comprises an inductor coil forming part of the aerosol-generating device and a susceptor arranged such that it is in thermal proximity to the aerosol-forming substrate. The inductor generates a varying magnetic field to generate eddy currents and hysteresis losses in the susceptor, causing the susceptor to heat up, thereby heating the aerosol-forming substrate. Inductive heating allows aerosol to be generated without exposing the heater to the aerosol-generating article. This can improve the ease with which the heater may be cleaned.

Some known aerosol-generating devices comprise more than one inductor coil, each inductor coil being arranged to heat a different portion of a susceptor. Such an aerosol-generating devices may be used to heat different portions of an aerosol-generating article at different times, or to different temperatures. However, it can be difficult for such aerosol-generating devices to heat one portion of an aerosol-generating article without also indirectly heating an adjacent portion of the aerosol-generating article.

It would be desirable to provide an aerosol-generating device that mitigates or overcomes these problems with known systems.

According to the invention there is provided an aerosol-generating device according to claim 1.

As used herein, the term "duty cycle" refers to the amount of time the signal is on and to the amount of time the signal is off. The duty cycle is given in percent. A duty cycle of 60% means that the signal is on 60% of the time and that the signal is off 40% of time.

As used herein, the term "complementary duty cycles" refers to two signals, wherein one signal is on while the other signal is off. The signals may have sawtooth patterns with the second signal having a reverse sawtooth pattern as the first signal. The combined signals may result in a continuous AC current.

In some embodiments, the duty cycles of the first and second signals gradually shift. In other words, the duty cycle of the first signal may be reduced while the duty cycle of the second signal may be increased or vice versa.

The controller may be configured to supply the second alternating pulse width modulated signal to the second inductor coil during the first phase to increase the temperature of the second portion of the susceptor arrangement from an initial temperature to a third operating temperature, lower than the first operating temperature, wherein the controller is configured to supply the second alternating pulse width modulated signal during the first phase with a duty cycle lower than 50%, preferably lower than 40%, preferably lower than 30%, more preferably lower than 20% and most preferably lower than 10%.

The controller may be configured to supply the second alternating pulse width modulated signal to the second inductor coil during the second phase to increase the temperature of the second portion of the susceptor arrangement from the third operating temperature to a fourth operating temperature, higher than the second operating temperature, wherein the controller is configured to supply the second alternating pulse width modulated signal during the second phase with a duty cycle higher than 50%, preferably higher than 60%, preferably higher than 70%, more preferably higher than 80% and most preferably higher than 90%.

The controller may be configured to supply the first alternating pulse width modulated signal during the first phase with a duty cycle of higher than 80%, wherein the controller is configured to supply the second alternating pulse width modulated signal during the first phase with a duty cycle of lower than 20%.

The controller may be configured to supply the first alternating pulse width modulated signal during the first phase with a duty cycle of higher than 90%, wherein the controller is configured to supply the second alternating pulse width modulated signal during the first phase with a duty cycle of lower than 10%.

The controller may be configured to supply the first alternating pulse width modulated signal during the second phase with a duty cycle of lower than 20%, wherein the controller is configured to supply the second alternating pulse width modulated signal during the second phase with a duty cycle of higher than 80%.

The controller may be configured to supply the first alternating pulse width modulated signal during the second phase with a duty cycle of lower than 10%, wherein the controller is configured to supply the second alternating pulse width modulated signal during the second phase with a duty cycle of higher than 90%.

The aerosol-generating device may further comprise a power supply for providing power to the inductive heating arrangement.

The controller may comprise a microcontroller.

The microcontroller may be configured to utilize the clock frequency of the microcontroller as one or both of the alternating frequency of the first alternating pulse width modulated signal and of the second alternating pulse width modulated signal.

The aerosol-generating device may further comprise an oscillator for generating one or both of the alternating frequency of the first alternating pulse width modulated signal and of the second alternating pulse width modulated signal.

The controller may further comprise an oscillator for generating one or both of the alternating frequency of the first alternating pulse width modulated signal and of the second alternating pulse width modulated signal.

The aerosol-generating device may further comprise a first power stage, the first power stage at least comprising the first inductor coil and a first capacitor.

The first inductor coil and the first capacitor may be arranged as a first LC circuit.

The aerosol-generating device may further comprise a second power stage, the second power stage at least comprising the second inductor coil and a second capacitor.

The second inductor coil and the second capacitor may be arranged as a second LC circuit.

According to the invention there is also provided an aerosol-generating system comprising an aerosol-generating device according to the invention and an aerosol-generating article comprising an aerosol-forming substrate.

According to the invention there is also provided a method of controlling an aerosol-generating device, according to claim 12.

The second alternating pulse width modulated signal may be supplied to the second inductor coil during the first phase to increase the temperature of the second portion of the susceptor arrangement from an initial temperature to a third operating temperature, wherein the second alternating pulse width modulated signal is supplied during the first phase with a duty cycle lower than 50%, preferably lower than 40%, preferably lower than 30%, more preferably lower than 20% and most preferably lower than 10%.

The second alternating pulse width modulated signal may be supplied to the second inductor coil during the second phase to increase the temperature of the second portion of the susceptor arrangement from the third operating temperature to a fourth operating temperature, wherein the second alternating pulse width modulated signal is supplied during the second phase with a duty cycle higher than 50%, preferably higher than 60%, preferably higher than 70%, more preferably higher than 80% and most preferably higher than 90%.

The first alternating pulse width modulated signal may be supplied during the first phase with a duty cycle of 80%, wherein the second alternating pulse width modulated signal is supplied during the first phase with a duty cycle of 20%.

The first alternating pulse width modulated signal may be supplied during the first phase with a duty cycle of 90%, wherein the second alternating pulse width modulated signal is supplied during the first phase with a duty cycle of 10%.

The first alternating pulse width modulated signal may be supplied during the second phase with a duty cycle of 20%, wherein the second alternating pulse width modulated signal is supplied during the second phase with a duty cycle of 80%.

The first alternating pulse width modulated signal may be supplied during the second phase with a duty cycle of 10%, wherein the second alternating pulse width modulated signal is supplied during the second phase with a duty cycle of 90%.

As used herein, the term "aerosol-forming substrate" relates to a substrate capable of releasing volatile compounds that can form an aerosol. Such volatile compounds may be released by heating the aerosol-forming substrate. An aerosol-forming substrate is typically part of an aerosol-generating article.

As used herein, the term "aerosol-generating article" refers to an article comprising an aerosol-forming substrate that is capable of releasing volatile compounds that can form an aerosol. For example, an aerosol-generating article may be an article that generates an aerosol that is directly inhalable by the user drawing or puffing on a mouthpiece at a proximal or user-end of the system. An aerosol-generating article may be disposable. An article comprising an aerosol-forming substrate comprising tobacco may be referred to herein as a tobacco stick.

As used herein, the term "aerosol-generating device" refers to a device that interacts with an aerosol-forming substrate to generate an aerosol.

As used herein, the term "aerosol-generating system" refers to the combination of an aerosol-generating device with an aerosol-generating article. In the aerosol-generating system, the aerosol-generating article and the aerosol-generating device cooperate to generate a respirable aerosol.

As used herein, the term "varying current" includes any currents that vary with time to generate a varying magnetic field. The term "varying current" is intended to include alternating currents. Where the varying current is an alternating current, the alternating current generates an alternating magnetic field.

As used herein, the term "length" refers to the major dimension in a longitudinal direction of an aerosol-generating device or an aerosol-generating article, or a component of the aerosol-generating device or the aerosol-generating article.

As used herein, the term "width" refers to the major dimension in a transverse direction of an aerosol-generating device or an aerosol-generating article, or a component of the aerosol-generating device or the aerosol-generating article, at a particular location along its length. The term "thickness" refers to the dimension in a transverse direction perpendicular to the width.

As used herein, the term "transverse cross-section" is used to describe the cross-section of an aerosol-generating device or an aerosol-generating article, or a component of the aerosol-generating device or the aerosol-generating article, in a direction perpendicular to the longitudinal direction at a particular location along its length.

As used herein, the term "proximal" refers to a user end, or mouth end of the aerosol-generating device or aerosol-generating article. The proximal end of a component of an aerosol-generating device or an aerosol-generating article is the end of the component closest to the user end, or mouth end of the aerosol-generating device or the aerosol-generating article. As used herein, the term "distal" refers to the end opposite the proximal end.

The first phase may have a predetermined duration. The second phase may have a predetermined duration. The duration of the first phase and the duration of the second phase may be the same. The duration of the second phase may be different to the duration of the first phase. Advantageously, this may enable the system to heat a first portion of aerosol-forming substrate and a second portion of aerosol-forming substrate for different times. The duration of the second phase may be less than the duration of the first phase. The duration of the second phase may be greater than the duration of the first phase.

The duration of the first phase may be between about 50 seconds and about 200 seconds. The duration of the second phase is between about 50 seconds and about 200 seconds. The combined duration of the first phase and the second phase may be between about 100 seconds and about 400 seconds. The combined duration of the first phase and the second phase may be between about 150 seconds and about 300 seconds.

In some embodiments, the system further comprises a puff detector configured to detect when a user takes a puff on the system to receive aerosol. In these embodiments, the duration of the first phase may be based on a first predetermined number of puffs detected by the puff detector. The first predetermined number of puffs may be between 2 and 5. In these embodiments, the duration of the second phase may be based on a second predetermined number of puffs detected by the puff detector. The second predetermined number of puffs may be between 2 and 5. In these embodiments, the combined duration of the first phase and the second phase may be based on a combined predetermined number of puffs detected by the puff detector. The combined predetermined number of puffs may be between 3 and 10 user puffs.

In some preferred embodiments, the first phase ends after a first maximum number of puffs is detected or earlier if a first maximum duration is reached. The first maximum number of puffs may be between 2 and 5, and the first maximum duration is between 50 seconds and about 200 seconds.

In some preferred embodiments, the wherein the second phase ends after a second maximum number of puffs is detected or earlier if a second maximum duration is reached. The second maximum number of puffs may be between 2 and 5, and the second maximum duration may be between 50 seconds and about 200 seconds.

The first alternating pulse width modulated signal may be controlled such that the temperature of the first section of the susceptor arrangement increases from an initial temperature in accordance with a first operating temperature profile. The first temperature profile is a predetermined desired temperature of the first section of the susceptor arrangement over time. At any given point in time, when the actual temperature of the first section of the susceptor arrangement differs from the temperature of the first temperature profile at that point in time, the first alternating pulse width modulated signal is adjusted to adjust the temperature of the first section of the susceptor arrangement to the temperature specified by the first temperature profile at that time.

Similarly, the second alternating pulse width modulated signal may be controlled to increase the temperature of the second section of the susceptor arrangement from an initial temperature in accordance with a second temperature profile. The second temperature profile is a predetermined desired temperature of the second section of the susceptor arrangement over time. At any given point in time, when the actual temperature of the second section of the susceptor arrangement differs from the temperature of the second temperature profile at that point in time, the second alternating pulse width modulated signal is adjusted to adjust the temperature of the second section of the susceptor arrangement to the temperature specified by the second temperature profile at that time.

In some embodiments, the first operating temperature profile is substantially constant. In some embodiments, the first operating temperature profile varies with time.

In some embodiments, the second operating temperature profile is substantially constant. In some embodiments, the second operating temperature profile varies with time.

In some embodiments, in at least a portion of the first phase, the first operating temperature profile is greater than the second operating temperature profile. In these embodiments, in at least a portion of the first phase, the first operating temperature profile is greater than the second operating temperature profile by at least about 50 degrees Celsius. The first operating temperature profile may be greater than the second operating temperature profile through the entire first phase.

In some embodiments, in the second phase, the first operating temperature profile and the second operating temperature profile are substantially the same. In some embodiments, in the second phase, the second operating temperature profile is within about 5 degrees Celsius of the first operating temperature profile.

In some embodiments, in at least a portion of the second phase, the second operating temperature profile is greater than the first operating temperature profile. In these embodiments, in the second phase, the second operating temperature profile may be greater than the first operating temperature profile by no more than about 50 degrees Celsius.

In some embodiments, the first operating temperature profile is substantially constant during at least a portion of the first phase. The first operating temperature profile may be constant during the first phase.

In some embodiments, the first operating temperature profile is substantially constant during at least a portion of the second phase. The first operating temperature profile may be constant during the second phase.

In some embodiments, the second operating temperature profile is substantially constant during at least a portion of the second phase. The second operating temperature profile may be constant during the second phase.

The first operating temperature profile may be between about 180 degrees Celsius and 300 degrees Celsius during at least a portion of the first phase. The first operating temperature profile may be between about 160 degrees Celsius and about 260 degrees Celsius during at least a portion of the second phase. The second operating temperature profile may be between about 180 degrees Celsius and about 300 degrees Celsius during at least a portion of the second phase.

The susceptor arrangement may have any suitable form. The susceptor arrangement may have a unitary structure. The susceptor arrangement may comprise a plurality of unitary structures. The susceptor arrangement may be elongate. The susceptor arrangement may have any suitable transverse cross-section. For example, the susceptor arrangement may have a circular, elliptical, square, rectangular, triangular or other polygonal transverse cross-section.

In some embodiments, the susceptor arrangement may comprise an internal heating element. As used herein, the term "internal heating element" refers to a heating element configured to be inserted into an aerosol-forming substrate.

In some embodiments, the susceptor arrangement may be configured to penetrate an aerosol-forming substrate when an aerosol-forming substrate is received by the device. In these embodiments, the internal heating element is preferably configured to be insertable into an aerosol forming substrate. An internal heating element may be in the form of a blade. An internal heating element may be in the form of a pin. An internal heating element may be in the form of a cone. Where the aerosol-generating device comprises a device cavity for receiving an aerosol-forming substrate, preferably the internal heating element extends into the device cavity.

In some embodiments, a susceptor arrangement may be an external heating element. As used herein, the term "external heating element" refers to a heating element configured to heat an outer surface of an aerosol-forming substrate. An external heating element is preferably configured to at least partially surround an aerosol forming substrate when the aerosol-forming substrate is received by the aerosol-generating device. The susceptor arrangement may be configured to heat an outer surface of the aerosol-forming substrate when the aerosol-forming substrate is received in a susceptor arrangement cavity.

The susceptor arrangement may be configured to substantially circumscribe an aerosol-forming substrate when an aerosol-forming substrate is received by the device.

The susceptor arrangement may comprise a cavity for receiving aerosol-forming substrate. The susceptor arrangement may comprise an outer side and an inner side, opposite the outer side. The inner side may at least partially define the susceptor arrangement cavity for receiving aerosol-forming substrate. The first portion of the susceptor arrangement may be tubular and define a portion of a susceptor arrangement cavity. The second portion of the susceptor arrangement may be tubular and define a portion of a susceptor arrangement cavity.

In some embodiments, the susceptor arrangement comprises a plurality of inner cavities for receiving aerosol-forming substrate. The inner cavity of the first portion of the susceptor arrangement may form a first cavity of the susceptor arrangement, and the inner cavity of the second portion of the susceptor arrangement may form a second cavity of the susceptor arrangement.

In some preferred embodiments, the susceptor arrangement comprises a single inner cavity for receiving aerosol-forming substrate. In these embodiments, the inner cavity of the first portion of the susceptor arrangement defines a portion of the single inner cavity of the susceptor arrangement, and the inner cavity of the second portion of the susceptor arrangement defines a second portion of the single inner cavity of the susceptor arrangement. In some preferred embodiments, the susceptor arrangement is a tubular susceptor arrangement. An inner surface of the tubular susceptor arrangement may define the susceptor arrangement cavity.

In embodiments in which the aerosol-generating device comprises a device cavity for receiving an aerosol-forming substrate, the susceptor arrangement may at least partially circumscribe the device cavity. The susceptor arrangement cavity may be aligned with the device cavity.

In some embodiments, the susceptor arrangement comprises at least one internal heating element, and at least one external heating element.

The susceptor arrangement comprises at least one susceptor. The susceptor arrangement may comprise a single susceptor. The susceptor arrangement may consist of a single susceptor. The first portion of the susceptor arrangement may comprise a first susceptor. The second portion of the susceptor arrangement may comprise a second susceptor.

As used herein, the term "susceptor" refers to an element comprising a material that is capable of converting electromagnetic energy into heat. When a susceptor is located in a varying magnetic field, the susceptor is heated. Heating of the susceptor may be the result of at least one of hysteresis losses and eddy currents induced in the susceptor, depending on the electrical and magnetic properties of the susceptor material.

A susceptor may comprise any suitable material. A susceptor may be formed from any material that can be inductively heated to a temperature sufficient to aerosolise an aerosol-forming substrate. Preferred susceptors may be heated to a temperature in excess of about 250 degrees Celsius. Preferred susceptors may be formed from an electrically conductive material. As used herein, "electrically conductive" refers to materials having an electrical resistivity of less than or equal to 1 × 10⁻⁴ ohm metres (Ω.m), at twenty degrees Celsius. Preferred susceptors may be formed from a thermally conductive material. As used herein, the term "thermally conductive material" is used to describe a material having a thermal conductivity of at least 10 watts per metre Kelvin (W/(m.K)) at 23 degrees Celsius and a relative humidity of 50 percent as measured using the modified transient plane source (MTPS) method.

Suitable materials for a susceptor include graphite, molybdenum, silicon carbide, stainless steels, niobium, aluminium, nickel, nickel containing compounds, titanium, and composites of metallic materials. Some preferred susceptors comprise a metal or carbon. Some preferred susceptors comprise a ferromagnetic material, for example, ferritic iron, a ferromagnetic alloy, such as ferromagnetic steel or stainless steel, ferromagnetic particles, and ferrite. Some preferred susceptors consists of a ferromagnetic material. A suitable susceptor may comprise aluminium. A suitable susceptor may consist of aluminium. A susceptor may comprise at least about 5 percent, at least about 20 percent, at least about 50 percent or at least about 90 percent of ferromagnetic or paramagnetic materials.

Preferably, a susceptor is formed from a material that is substantially impermeable to gas. In other words, preferably, a susceptor is formed from a material that is not gas permeable.

A susceptor of the susceptor arrangement may have any suitable form. For example, a susceptor may be elongate. A susceptor may have any suitable transverse cross-section. For example, a susceptor may have a circular, elliptical, square, rectangular, triangular or other polygonal transverse cross-section.

The first portion of the susceptor arrangement may be a tubular susceptor. The second portion of the susceptor arrangement may be a tubular susceptor. A tubular susceptor comprises an annular body defining an inner cavity. The susceptor cavity may be configured to receive aerosol-forming substrate. The susceptor cavity may be an open cavity. The susceptor cavity may be open at one end. The susceptor cavity may be open at both ends.

In some embodiments having a plurality of susceptors, each susceptor may be substantially identical. For example, the second susceptor may be substantially identical to the first susceptor. Each susceptor may be formed from the same material. Each susceptor may have substantially the same shape and dimensions. Making each susceptor substantially identical to the other susceptors may enable each susceptor to be heated to substantially the same temperature, and heated at substantially the same rate, when exposed to a given varying magnetic field.

In some embodiments, the second susceptor differs to the first susceptor in at least one characteristic. The second susceptor may be formed from a different material than the first susceptor. The second susceptor may have a different shape and dimensions to the first susceptor. The second susceptor may have a length that is longer than the length of the first susceptor. Making each susceptor different to the other susceptors may enable each susceptor to be adapted to provide optimal heat for different aerosol-forming substrates.

In one example, a first aerosol-forming substrate may require heating to a first temperature in order to generate a first aerosol with desired characteristics, and a second aerosol-forming substrate may require heating to a second temperature, different to the first temperature, in order to generate a second aerosol with desired characteristics. In this example, the first susceptor may be formed from a first material suitable for heating the first aerosol-forming substrate to the first temperature, and the second susceptor may be formed from a second material, different to the first material, suitable for heating the second aerosol-forming substrate to the second temperature.

In another example, an aerosol-generating article may comprise a first aerosol-forming substrate having a first length, and a second aerosol-forming substrate having a second length, different to the first length, such that heating the second aerosol-forming substrate generates a different amount of aerosol than heating the first aerosol-forming substrate. In this embodiment, the first susceptor may have a length substantially equal to the first length, and the second susceptor may have a length substantially equal to the second length.

In some preferred embodiments, the first susceptor is an elongate tubular susceptor and the second susceptor is an elongate tubular susceptor. In these preferred embodiments, the first susceptor and the second susceptor may be substantially aligned. In other words, the first susceptor and the second susceptor may be co-axially aligned.

The susceptor arrangement may comprise any suitable number of susceptors. The susceptor arrangement may comprise a plurality of susceptors. The susceptor arrangement may comprise at least two susceptors. For example, the susceptor arrangement may comprise three, four, five or six susceptors. Where the susceptor arrangement comprises more than two susceptors, an intermediate element may be disposed between each adjacent pair of susceptors.

In some preferred embodiments, a susceptor may comprise a susceptor layer provided on a support body. In embodiments having a first susceptor and a second susceptor, each of the first susceptor and the second susceptor may be formed from a support body and a susceptor layer. Arranging a susceptor in a varying magnetic field induces eddy currents in close proximity to the susceptor surface, in an effect that is referred to as the skin effect. Accordingly, it is possible to form a susceptor from a relatively thin layer of susceptor material, while ensuring the susceptor is effectively heated in the presence of a varying magnetic field. Making a susceptor from a support body and a relatively thin susceptor layer may facilitate manufacture of an aerosol-generating article that is simple, inexpensive and robust.

The support body may be formed from a material that is not susceptible to inductive heating. Advantageously, this may reduce heating of surfaces of the susceptor that are not in contact with an aerosol-forming substrate, where surfaces of the support body form surfaces of the susceptor that are not in contact with an aerosol-forming substrate.

The support body may comprise an electrically insulative material. As used herein, "electrically insulating" refers to materials having an electrical resistivity of at least 1 ×10⁴ ohm metres (Ω.m), at twenty degrees Celsius.

The support body may comprise a thermally insulative. As used herein the term 'thermally insulative material' is used to describe material having a bulk thermal conductivity of less than or equal to about 40 watts per metre Kelvin (W/(m.K)) at 23 degrees Celsius and a relative humidity of 50 percent as measured using the modified transient plane source (MTPS) method.

Forming the support body from a thermally insulative material may provide a thermally insulative barrier between the susceptor layer and other components of an inductive heating arrangement, such as an inductor coil circumscribing the susceptor arrangement. Advantageously, this may reduce heat transfer between the susceptor and other components of an inductive heating system.

The support body may be a tubular support body and the susceptor layer may be provided on an inner surface of the tubular support body. Providing the susceptor layer on the inner surface of the support body may position the susceptor layer adjacent an aerosol-forming substrate in the cavity of the susceptor arrangement, improving heat transfer between the susceptor layer and the aerosol-forming substrate.

In some preferred embodiments having a first susceptor and a second susceptor, the first susceptor comprises a tubular support body formed from a thermally insulative material and a susceptor layer on an inner surface of the tubular support body. In some preferred embodiments, the second susceptor comprises a tubular support body formed from a thermally insulative material and a susceptor layer on an inner surface of the tubular support body.

The susceptor may be provided with a protective outer layer, for example a protective ceramic layer or protective glass layer. A protective outer layer may improve the durability of the susceptor and facilitate cleaning of the susceptor. The protective outer layer may substantially surround the susceptor. The susceptor may comprise a protective coating formed from a glass, a ceramic, or an inert metal.

The susceptor arrangement may comprise a separation between the first portion of the susceptor arrangement and the second portion of the susceptor arrangement.

The separation may be any suitable size to thermally insulate the first portion of the susceptor arrangement from the second portion of the susceptor arrangement.

The susceptor arrangement may comprise an intermediate element disposed between the first portion of the susceptor arrangement and the second portion of the susceptor arrangement. The intermediate element may be disposed in the separation between the first portion of the susceptor arrangement and the second portion of the susceptor arrangement. The intermediate element may extend between the first portion of the susceptor arrangement and the second portion of the susceptor arrangement. The intermediate element may contact an end of the first portion of the susceptor arrangement. The intermediate element may contact an end of the second portion of the susceptor arrangement. The intermediate element may be secured to an end of the first portion of the susceptor arrangement. The intermediate element may be secured to an end of the second portion of the susceptor arrangement. The intermediate element may connect the second portion of the susceptor arrangement to the first portion of the susceptor arrangement. Where the intermediate element connects the second portion of the susceptor arrangement to the first portion of the susceptor arrangement, the intermediate element may provide the susceptor arrangement with structural support. Advantageously, the intermediate element may enable the susceptor arrangement to be provided as a single unitary element that may be straightforward to remove and replace from an inductive heating arrangement.

The intermediate element may have any suitable form. The intermediate element may have any suitable transverse cross-section. For example, the intermediate element may have a circular, elliptical, square, rectangular, triangular or other polygonal transverse cross-section. The intermediate element may be tubular. A tubular intermediate element comprises an annular body defining an inner cavity. The intermediate element may be configured to enable gas to permeate from an outer side of the intermediate element into the inner cavity. The intermediate element cavity may be configured to receive a portion of an aerosol-generating article. The intermediate element cavity may be an open cavity. The intermediate element cavity may be open at one end. The intermediate element cavity may be open at both ends.

In some preferred embodiments, the first portion of the susceptor arrangement and the second portion of the susceptor arrangement are tubular susceptors, and the intermediate element is a tubular intermediate element. In these embodiments, the tubular first susceptor, the tubular second susceptor and the tubular intermediate element may be substantially aligned. The tubular first susceptor, the tubular intermediate element and the tubular second susceptor may be arranged end-to-end, in the form of a tubular rod. The inner cavities of the tubular first susceptor, the tubular intermediate element and the tubular second susceptor may be substantially aligned. The inner cavities of the tubular first susceptor, the tubular intermediate element and the tubular second susceptor may define the susceptor arrangement cavity.

The intermediate element may be formed from any suitable material.

In preferred embodiments, the intermediate element is formed from a different material to the first portion of the susceptor arrangement and the second portion of the susceptor arrangement.

The intermediate element may comprise a thermally insulative material for thermally insulating the first portion of the susceptor arrangement from the second portion of the susceptor arrangement. The intermediate element may comprise a material having a bulk thermal conductivity of less than or equal to about 100 milliwatts per metre Kelvin (mW/(mK)) at 23 degrees Celsius and a relative humidity of 50 percent as measured using the modified transient plane source (MTPS) method. Providing an intermediate element formed from a thermally insulative material in the separation between the first portion of the susceptor arrangement and the second portion of the susceptor arrangement may further reduce heat transfer between the first portion of the susceptor arrangement and the second portion of the susceptor arrangement. Advantageously, this may improve the ability of a susceptor arrangement to selectively heat discrete portions of an aerosol-forming substrate. This may also enable the size of the separation between the first portion of the susceptor arrangement and the second portion of the susceptor arrangement to be reduced, and, in turn, the size of the susceptor arrangement to be reduced.

The intermediate element may comprise an electrically insulative material for electrically insulating the first portion of the susceptor arrangement from the second portion of the susceptor arrangement. The susceptor may comprise a material having an electrical resistivity of at least 1 ×10⁴ ohm metres (Ωm), at twenty degrees Celsius.

The intermediate element may comprise at least one of: a thermally insulative material for thermally insulating the first portion of the susceptor arrangement from the second portion of the susceptor arrangement; and an electrically insulative material for electrically insulating the first portion of the susceptor arrangement from the second portion of the susceptor arrangement. In some preferred embodiments, the intermediate element comprises a thermally insulative material for thermally insulating the first portion of the susceptor arrangement from the second portion of the susceptor arrangement, and an electrically insulative material for electrically insulating the first portion of the susceptor arrangement from the second portion of the susceptor arrangement.

Particularly suitable materials for the intermediate element may include polymeric materials, such as polyetheretherketone (PEEK), liquid crystal polymers, such as Kevlar^{®}, certain cements, glasses, and ceramic materials, such as zirconium dioxide (ZrO2), silicon nitride (Si3N4) and aluminium oxide (Al2O3).

The intermediate element may be gas permeable. In other words, the intermediate element is configured to enable gas to permeate through the intermediate element. Typically, the intermediate element is configured to enable gas to permeate from one side of the intermediate element to another side of the intermediate element. The intermediate element may comprise an outer side and an inner side, opposite the outer side. The intermediate element may be configured to enable gas to permeate from the outer side to the inner side.

In some embodiments, the intermediate element comprise an air passage configured to permit the passage of air through the intermediate element. In these embodiments, the intermediate element may not be required to be formed from a gas permeable material. Accordingly, in some embodiments, the intermediate element is formed from a material that is not permeable to gas, and comprises an air passage configured to permit the passage of air through the intermediate element. The intermediate element may comprise a plurality of air passages. The intermediate element may comprise any suitable number of air passages, for example, two, three, four, five or six air passages. Where the intermediate element comprises a plurality of air passages, the air passages may be regularly spaced apart on the intermediate element.

Where the intermediate element is a tubular intermediate element defining an inner cavity, the intermediate element may comprise an air passage configured to permit air to flow from an outer surface of the intermediate element into the inner cavity. The intermediate element may comprise an air passage extending from an outer surface to an inner surface. Where a tubular intermediate element comprises a plurality of air passages, the air passages may be regularly spaced around the circumference of the tubular intermediate element.

The first inductor coil is configured such that a varying electric current supplied to the first inductor coil generates a varying magnetic field. The first inductor coil is arranged relative to the susceptor arrangement such that a varying electric current supplied to the first inductor coil generates a varying magnetic field that heats the first portion of the susceptor arrangement of the susceptor arrangement.

The second inductor coil is configured such that a varying electric current supplied to the second inductor coil generates a varying magnetic field. The second inductor coil is arranged relative to the susceptor arrangement such that a varying electric current supplied to the second inductor coil generates a varying magnetic field that heats the second portion of the susceptor arrangement of the susceptor arrangement.

An inductor coil may have any suitable form. For example, an inductor coil may be a flat inductor coil. A flat inductor coil may be wound in a spiral, substantially in a plane. Preferably, the inductor coil is a tubular inductor coil, defining an inner cavity. Typically, a tubular inductor coil is helically wound about an axis. An inductor coil may be elongate. Particularly preferably, an inductor coil may be an elongate tubular inductor coil. An inductor coil may have any suitable transverse cross-section. For example, an inductor coil may have a circular, elliptical, square, rectangular, triangular or other polygonal transverse cross-section.

An inductor coil may be formed from any suitable material. An inductor coil is formed from an electrically conductive material. Preferably, the inductor coil is formed from a metal or a metal alloy.

Where an inductor coil is a tubular inductor coil, preferably, a portion of the susceptor arrangement is arranged within the inner cavity of the inductor coil. Particularly preferably, the first inductor coil is a tubular inductor coil, and at least a portion of the first portion of the susceptor arrangement is arranged within the inner cavity of the first inductor coil. The length of the tubular first inductor coil may be substantially similar to the length of the first portion of the susceptor arrangement. Particularly preferably, the second inductor coil is a tubular inductor coil, and at least a portion of the second portion of the susceptor arrangement is arranged within the inner cavity of the second inductor coil. The length of the tubular second inductor coil may be substantially similar to the length of the second portion of the susceptor arrangement.

The second inductor coil has a different number of turns to the first inductor coil. The second inductor coil may have a different length or transverse cross-section to the first inductor coil.

The first inductor coil and the second inductor coil may be arranged in any suitable arrangement. Particularly preferably, the first inductor coil and the second inductor coil are coaxially aligned along an axis. Where the first inductor coil and the second inductor coil are elongate tubular inductor coils, the first inductor coil and the second inductor coil may be coaxially aligned along a longitudinal axis, such that the inner cavities of the coils are aligned along the longitudinal axis.

In some embodiments, the first inductor coil and the second inductor coil are wound in the same direction. In some embodiments, the second inductor coil is wound in a different direction to the first inductor coil.

The inductive heating arrangement may comprise any suitable number of inductor coils. The susceptor arrangement comprises a plurality of inductor coils. The inductive heating arrangement comprises at least two inductor coils. Preferably, the number of inductor coils of the inductive heating arrangement is the same as the number of susceptors of the susceptor arrangement. The number of inductor coils of the inductive heating arrangement may be different to the number of susceptors of the susceptor arrangement. Where the number of inductor coils is the same as the number of susceptors, preferably each inductor coil is disposed about a susceptor. Particularly preferably, each inductor coil extends substantially the length of the susceptor about which it is disposed.

The susceptor arrangement may comprise a flux concentrator. The flux concentrator may be disposed around an inductor coil of the inductive heating arrangement. The flux concentrator is configured to distort the varying magnetic field generated by the inductor coil towards the susceptor arrangement.

Advantageously, by distorting the magnetic field towards the susceptor arrangement, a flux concentrator can concentrate the magnetic field at the susceptor arrangement. This may increase the efficiency of the inductive heating arrangement in comparison to embodiments in which a flux concentrator is not provided. As used herein, the phrase "concentrate the magnetic field" means to distort the magnetic field so that the magnetic energy density of the magnetic field is increased where the magnetic field is "concentrated".

As used herein, the term "flux concentrator" refers to a component having a high relative magnetic permeability which acts to concentrate and guide the magnetic field or magnetic field lines generated by an inductor coil. As used herein, the term "relative magnetic permeability" refers to the ratio of the magnetic permeability of a material, or of a medium, such as the flux concentrator, to the magnetic permeability of free space, "µ₀", where µ₀ is 4*π*×10⁻⁷ newtons per ampere squared (N.A⁻²).

As used herein, the term "high relative magnetic permeability" refers to a relative magnetic permeability of at least 5 at 25 degrees Celsius, for example at least 10, at least 20, at least 30, at least 40, at least 50, at least 60, at least 80, or at least 100 degrees Celsius. These example values preferably refer to the values of relative magnetic permeability for a frequency of between 6 and 8 megahertz (MHz) and a temperature of 25 degrees Celsius.

The flux concentrator may be formed from any suitable material or combination of materials. Preferably, the flux concentrator comprises a ferromagnetic material, for example a ferrite material, a ferrite powder held in a binder, or any other suitable material including ferrite material such as ferritic iron, ferromagnetic steel or stainless steel.

In some embodiments, the inductive heating arrangement comprises a flux concentrator disposed around the first inductor coil and the second inductor coil. In these embodiments, the flux concentrator is configured to distort the varying magnetic field generated by the first inductor coil towards the first portion of the susceptor arrangement of the susceptor arrangement and to distort the varying magnetic field generated by the second inductor coil towards the second portion of the susceptor arrangement of the susceptor arrangement.

In some of these embodiments, a portion of the flux concentrator extends into the intermediate element between the first portion of the susceptor arrangement and the second portion of the susceptor arrangement. Extending a portion of a flux concentrator into the intermediate element between the first portion of the susceptor arrangement and the second portion of the susceptor arrangement may further distort the magnetic field generated by the first inductor coil and the magnetic field generated by the second inductor coil. This further distortion may result in the magnetic field generated by the first inductor coil being further concentrated towards the first portion of the susceptor arrangement, and the magnetic field generated by the second inductor coil being further concentrated towards the second portion of the susceptor arrangement. This may further improve the efficiency of the inductive heating arrangement.

In some embodiments, the inductive heating arrangement comprises a plurality of flux concentrators. In some preferred embodiments, an individual flux concentrator is disposed around each inductor coil. Providing each inductor coil with a dedicated flux concentrator may enable the flux concentrator to be configured optimally to distort the magnetic field generated by the inductor coil. Such an arrangement may also enable the inductive heating arrangement to be formed from modular inductive heating units. Each inductive heating unit may comprise an inductor coil and a flux concentrator. Providing modular inductive heating units may facilitate standardised manufacturing of the inductive heating arrangement, and enable individual units to be removed and replaced.

In some preferred embodiments, the inductive heating arrangement comprises: a first flux concentrator disposed around the first inductor coil, the first flux concentrator being configured to distort the varying magnetic field generated by the first inductor coil towards the first portion of the susceptor arrangement; and a second flux concentrator disposed around the second inductor coil, the second flux concentrator being configured to distort the varying magnetic field generated by the second inductor coil towards the second portion of the susceptor arrangement.

In these preferred embodiments, a portion of the first flux concentrator may extend into the intermediate element between the first portion of the susceptor arrangement and the second portion of the susceptor arrangement. In these preferred embodiments, a portion of the second flux concentrator may extend into the intermediate element between the first portion of the susceptor arrangement and the second portion of the susceptor arrangement. Extending a portion of a flux concentrator into the intermediate element between susceptors may enable the flux concentrator to further distort the magnetic field generated by the inductor coil towards the susceptor.

The inductive heating arrangement may further comprise an inductive heating arrangement housing. The housing may keep together the susceptor arrangement, inductor coils and flux concentrators. This may help to secure the relative arrangements of the components of the inductive heating arrangement, and improve the coupling between the components. Preferably, the inductive heating arrangement housing is formed from an electrically insulative material.

Where the inductive heating arrangement comprises individual inductive heating units including an inductor coil and a flux concentrator, each inductive heating unit may comprise an inductive heating unit housing. The inductive heating unit housing may keep together the components of the inductive heating unit, and improve the coupling between the components. Preferably, the inductive heating unit housing is formed from an electrically insulative material.

The aerosol-generating device may comprise a power supply. The power supply may be any suitable type of power supply. The power supply may be a DC power supply. In some preferred embodiments, the power supply is a battery, such as a rechargeable lithium ion battery. The power supply may be another form of charge storage device, such as a capacitor. The power supply may require recharging. The power supply may have a capacity that allows for the storage of enough energy for one or more uses of the device. For example, the power supply may have sufficient capacity to allow for the continuous generation of aerosol for a period of around six minutes, corresponding to the typical time taken to smoke a conventional cigarette, or for a period that is a multiple of six minutes. In another example, the power supply may have sufficient capacity to allow for a predetermined number of uses of the device or discrete activations. In one embodiment, the power supply is a DC power supply having a DC supply voltage in the range of about 2.5 Volts to about 4.5 Volts and a DC supply current in the range of about 1 Amp to about 10 Amps (corresponding to a DC power supply in the range of about 2.5 Watts to about 45 Watts).

The aerosol-generating device may comprise a controller connected to the inductive heating arrangement and the power supply. In particular, the aerosol-generating device may comprise a controller connected to the first inductor coil and the second inductor coil and the power supply. The controller is configured to control the supply of power to the inductive heating arrangement from the power supply. The controller may comprise a microprocessor, which may be a programmable microprocessor, a microcontroller, or an application specific integrated chip (ASIC) or other electronic circuitry capable of providing control. The controller may comprise further electronic components. The controller may be configured to regulate a supply of current to the inductive heating arrangement. Current may be supplied to the inductive heating arrangement continuously following activation of the aerosol- generating device or may be supplied intermittently, such as on a puff by puff basis.

The aerosol-generating device may advantageously comprise DC/AC inverter, which may comprise a Class-C, Class-D or Class-E power amplifier. The DC/AC converter may be arranged between the power supply and the inductive heating arrangement.

The aerosol-generating device may further comprise a DC/DC converter between the power supply and the DC/AC converter.

The aerosol-generating device may comprises a first switch between the power supply and the first inductor coil, and a second switch between the power supply and the second inductor coil. The controller may be configured to turn on and off the first switch at a first switching rate to drive the first alternating pulse width modulated signal in the first inductor coil when the second switch remains off. The controller may be configured to turn on and off the second switch at a second switching rate to drive the second alternating pulse width modulated signal in the second inductor coil when the first switch remains off.

The controller may be configured to supply an alternating pulse width modulated signal to the inductive heating arrangement having any suitable frequency. The controller may be configured to supply an alternating pulse width modulated signal to the inductive heating arrangement having a frequency of between about 5 kilohertz and about 30 megahertz. In some preferred embodiments, the controller is configured to supply an alternating pulse width modulated signal to the inductive heating arrangement of between about 5 kilohertz and about 500 kilohertz. In some embodiments, the controller is configured to supply a high frequency alternating pulse width modulated signal to the inductive heating arrangement. As used herein, the term "high frequency alternating pulse width modulated signal" means an alternating pulse width modulated signal having a frequency of between about 500 kilohertz and about 30 megahertz. The high frequency alternating pulse width modulated signal may have a frequency of between about 1 megahertz and about 30 megahertz, such as between about 1 megahertz and about 10 megahertz, or such as between about 5 megahertz and about 8 megahertz.

The aerosol-generating device may comprise a device housing. The device housing may be elongate. The device housing may comprise any suitable material or combination of materials. Examples of suitable materials include metals, alloys, plastics or composite materials containing one or more of those materials, or thermoplastics that are suitable for food or pharmaceutical applications, for example polypropylene, polyetheretherketone (PEEK) and polyethylene. Preferably, the material is light and non-brittle.

The device housing may define a device cavity for receiving an aerosol-forming substrate. The device cavity may be configured to receive at least a portion of an aerosol-generating article. The device cavity may have any suitable shape and size. The device cavity may be substantially cylindrical. The device cavity may have a substantially circular transverse cross-section.

The susceptor arrangement may be disposed in the device cavity. The susceptor arrangement may be disposed about the device cavity. Where the susceptor arrangement is a tubular susceptor arrangement, the susceptor arrangement may circumscribe the device cavity. An inner surface of the susceptor arrangement may form an inner surface of the device cavity.

The first inductor coil and the second inductor coil may be disposed in the device cavity. The first inductor coil and the second inductor coil may be disposed about the device cavity. The first inductor coil and the second inductor coil may circumscribe the device cavity. An inner surface of the first inductor coil and the second inductor coil may form an inner surface of the device cavity.

The device may have a proximal end and a distal end, opposite the proximal end. Preferably, the device cavity is arranged at a proximal end of the device.

The device cavity may have a proximal end and a distal end, opposite the proximal end. The proximal end of the device cavity may be substantially open for receiving an aerosol-generating article.

In some embodiments, the aerosol-generating device further comprises a cover movable over the proximal end of the device cavity for preventing insertion of an aerosol-generating article into the device cavity.

In some preferred embodiments, the first inductor coil is arranged towards the proximal end of the device cavity, and the second inductor coil is arranged towards the distal end of the device cavity. In these preferred embodiments, the controller may be configured to initiate heating of the aerosol-forming substrate by driving the first varying current in the first inductor coil, and subsequently driving the second varying current in the second inductor coil. Such operation heats a proximal portion of the device cavity before heating a distal portion of the device cavity.

The device housing may comprises an air inlet. The air inlet may be configured to enable ambient air to enter the device housing. The device housing may comprise any suitable number of air inlets. The device housing may comprise a plurality of air inlets.

The device housing may comprise an air outlet. The air outlet may be configured to enable air to enter the device cavity from within the device housing. The device housing may comprise any suitable number of air outlets. The device housing may comprise a plurality of air outlets.

Where the intermediate element of the susceptor arrangement is gas permeable, the aerosol-generating device may define an airflow pathway extending from the air inlet to the intermediate element of the susceptor arrangement. Such an airflow pathway may enable air to be drawn through the aerosol-generating device from the air inlet and into the device cavity through the intermediate element.

In some embodiments, the device cavity comprises a proximal end and a distal end, opposite the proximal end. In these embodiments, the device cavity may be open at the proximal end for receiving an aerosol-generating article. In these embodiment, the device cavity may be substantially closed at the distal end. The device housing may comprise an air outlet at the distal end of the device cavity. The aerosol-generating device may further comprise an annular seal towards the proximal end of the device cavity. The annular seal may extend into the device cavity. The annular seal may provide a substantially air-tight seal between the device housing and an external surface of an aerosol-generating article received in the device cavity. This may reduce the volume of air drawn into the device cavity in use through any gaps that exists between the external surface of the aerosol-generating article and the inner surface of the device cavity. This may increase the volume of air drawn into the aerosol-generating article through the permeable intermediate elements.

In some embodiments, the device housing comprises a mouthpiece. The mouthpiece may comprise at least one air inlet and at least one air outlet. The mouthpiece may comprise more than one air inlet. One or more of the air inlets may reduce the temperature of the aerosol before it is delivered to a user and may reduce the concentration of the aerosol before it is delivered to a user.

In some embodiments, a mouthpiece is provided as part of an aerosol-generating article. As used herein, the term "mouthpiece" refers to a portion of an aerosol-generating system that is placed into a user's mouth in order to directly inhale an aerosol generated by the aerosol-generating system from an aerosol-generating article received by the aerosol-generating device.

In some embodiments, the controller may be configured to monitor the current supplied to the inductive heating arrangement. The controller may be configured to determine the temperature of the susceptor arrangement based on the monitored current. The controller may be configured to monitor the first varying current and determine the temperature of the first portion of the susceptor arrangement based on the monitored first varying current. The controller may be configured to monitor the second varying current and determine the temperature of the second portion of the susceptor arrangement based on the monitored second varying current.

The aerosol-generating device may comprise a temperature sensor. The temperature sensor may be arranged to sense the temperature of the susceptor arrangement. The controller may be configured to control the first varying current based on the temperature of the susceptor arrangement sensed by the temperature sensor. The controller may be configured to control the second varying current based on the temperature of the susceptor arrangement sensed by the temperature sensor.

The temperature sensor may be any suitable type of temperature sensor. For example, the temperature sensor may be a thermocouple, a negative temperature coefficient resistive temperature sensor or a positive temperature coefficient resistive temperature sensor.

In some preferred embodiments, the aerosol-generating device may comprise a first temperature sensor arranged to sense the temperature of the first portion of the susceptor arrangement. In these embodiments, the controller may be configured to control the first varying current based on the temperature of the first portion of the susceptor arrangement sensed by the first temperature sensor.

In some preferred embodiments, the aerosol-generating device may comprise a second temperature sensor arranged to sense the temperature of the second portion of the susceptor arrangement. In these embodiments, the controller may be configured to control the second varying current based on the temperature of the second portion of the susceptor arrangement sensed by the second temperature sensor.

The aerosol-generating device may include a user interface to activate the device, for example a button to initiate heating of an aerosol-generating article.

The aerosol-generating device may comprise a display to indicate a state of the device or of the aerosol-forming substrate.

The aerosol-generating device may comprise a detector for detecting the presence of aerosol-forming substrate. Where the aerosol-generating device comprises a device cavity for receiving aerosol-forming substrate, the aerosol-generating device may comprise a detector for detecting the presence of an aerosol-forming substrate in the device cavity. Where the aerosol-generating device is configured to receive at least a portion of an aerosol-generating article, the aerosol-generating device may comprise an aerosol-generating article detector configured to detect the presence of an aerosol-generating article in the device cavity.

When an aerosol-forming substrate detector detects the presence of an aerosol-forming substrate, the controller may be configured to initiate heating by driving the first varying current in the first inductor coil.

When an aerosol-generating article detector detects the presence of an aerosol-generating article in the device cavity, the controller may be configured to initiate heating by driving the first varying current in the first inductor coil.

An aerosol-forming substrate detector and an aerosol-generating article detector may comprise any suitable type of detector. For example, the detector may be an optical, acoustic, capacitive or inductive detector.

The aerosol-generating device may comprise a puff detector configured to detect when a user takes a puff on the aerosol-generating system. As used herein, the term "puff" is used to refer to a user drawing on the aerosol-generating system to receive aerosol.

Preferably, the aerosol-generating device is portable. The aerosol-generating device may have a size comparable to a conventional cigar or cigarette. The aerosol-generating device may have a total length between about 30 millimetres and about 150 millimetres. The aerosol-generating device may have an outer diameter between about 5 millimetres and about 30 millimetres.

The aerosol-generating device may form part of an aerosol-generating system.

The aerosol-generating system may further comprise an aerosol-generating article. The aerosol-generating article may comprise an aerosol-forming substrate. The aerosol-generating article may comprise a first aerosol-forming substrate; and a second aerosol-forming substrate. When the aerosol-generating article is received in the device cavity, at least a portion of the first aerosol-forming substrate may be received in the first portion of the device cavity, and at least a portion of the second aerosol-forming substrate may be received in the second portion of the device cavity.

The susceptor arrangement, forming part of the inductive heating arrangement of the aerosol-generating device, is configured to heat an aerosol-forming substrate.

The aerosol-forming substrate may comprise nicotine. The nicotine-containing aerosol-forming substrate may be a nicotine salt matrix.

The aerosol-forming substrate may be a liquid. The aerosol-forming substrate may comprise solid components and liquid components. Preferably, the aerosol-forming substrate is a solid.

The aerosol-forming substrate may comprise plant-based material. The aerosol-forming substrate may comprise tobacco. The aerosol- forming substrate may comprise a tobacco-containing material including volatile tobacco flavour compounds which are released from the aerosol-forming substrate upon heating. The aerosol-forming substrate may comprise a non-tobacco material. The aerosol-forming substrate may comprise homogenised plant-based material. The aerosol-forming substrate may comprise homogenised tobacco material. Homogenised tobacco material may be formed by agglomerating particulate tobacco. In a particularly preferred embodiment, the aerosol-forming substrate comprises a gathered crimped sheet of homogenised tobacco material. As used herein, the term 'crimped sheet' denotes a sheet having a plurality of substantially parallel ridges or corrugations.

The aerosol-forming substrate may comprise at least one aerosol-former. An aerosol-former is any suitable known compound or mixture of compounds that, in use, facilitates formation of a dense and stable aerosol and that is substantially resistant to thermal degradation at the temperature of operation of the system. Suitable aerosol-formers are well known in the art and include, but are not limited to: polyhydric alcohols, such as triethylene glycol, 1,3-butanediol and glycerine; esters of polyhydricalcohols, such as glycerol mono-, di- or triacetate; and aliphatic esters of mono-, di- or polycarboxylic acids, such as dimethyl dodecanedioate and dimethyl tetradecanedioate. Preferred aerosol formers may include polyhydric alcohols or mixtures thereof, such as triethylene glycol, 1,3-butanediol. Preferably, the aerosol former is glycerine. Where present, the homogenised tobacco material may have an aerosol-former content of equal to or greater than 5 percent by weight on a dry weight basis, such as between about 5 percent and about 30 percent by weight on a dry weight basis. The aerosol-forming substrate may comprise other additives and ingredients, such as flavourants.

The aerosol-forming substrate may be comprised in an aerosol-generating article. An aerosol-generating device comprising the inductive heating arrangement may be configured to receive at least a portion of an aerosol-generating article. The aerosol-generating article may have any suitable form. The aerosol-generating article may be substantially cylindrical in shape. The aerosol- generating article may be substantially elongate. The aerosol-generating article may have a length and a circumference substantially perpendicular to the length.

The aerosol-forming substrate may be provided as an aerosol-generating segment containing an aerosol-forming substrate. The aerosol-generating segment may comprise a plurality of aerosol-forming substrates. The aerosol-generating segment may comprise a first aerosol-forming substrate and a second aerosol-forming substrate. In some embodiments, the second aerosol-forming substrate is substantially identical to the first aerosol-forming substrate. In some embodiments, the second aerosol-forming substrate is different from the first aerosol-forming substrate.

Where the aerosol-generating segment comprises a plurality of aerosol-forming substrates, the number of aerosol-forming substrates may be the same as the number of susceptors in the susceptor arrangement. Similarly, the number of aerosol-forming substrates may be the same as the number of inductor coils in the inductive heating arrangement.

The aerosol-generating segment may be substantially cylindrical in shape. The aerosol-generating segment may be substantially elongate. The aerosol-generating segment may also have a length and a circumference substantially perpendicular to the length.

Where the aerosol-generating segment comprises a plurality of aerosol-forming substrates, the aerosol-forming substrates may be arranged end-to-end along an axis of the aerosol-generating segment. In some embodiments, the aerosol-generating segment may comprise a separation between adjacent aerosol-forming substrates.

In some preferred embodiments, the aerosol-generating article may have a total length between about 30 millimetres and about 100 millimetres. In some embodiments, the aerosol-generating article has a total length of about 45 millimetres. The aerosol-generating article may have an outer diameter between about 5 millimetres and about 12 millimetres. In some embodiments, the aerosol-generating article may have an outer diameter of about 7.2 millimetres.

The aerosol-generating segment may have a length of between about 7 millimetres and about 15 millimetres. In some embodiments, the aerosol-generating segment may have a length of about 10 millimetres, or 12 millimetres.

The aerosol-generating segment preferably has an outer diameter that is about equal to the outer diameter of the aerosol-generating article. The outer diameter of the aerosol-generating segment may be between about 5 millimetres and about 12 millimetres. In one embodiment, the aerosol-generating segment may have an outer diameter of about 7.2 millimetres.

The aerosol-generating article may comprise a filter plug. The filter plug may be located at a proximal end of the aerosol-generating article. The filter plug may be a cellulose acetate filter plug. In some embodiments, the filter plug may have a length of about 5 millimetres to about 10 millimetres. In some preferred embodiments, the filter plug may have a length of about 7 millimetres.

The first portion of the susceptor arrangement may be arranged to heat a first portion of the aerosol-forming substrate. The first portion of the susceptor arrangement may be arranged to substantially circumscribe a first portion of the aerosol-forming substrate. The second portion of the susceptor arrangement may be arranged to heat a second portion of the aerosol-forming substrate. The second portion of the susceptor arrangement may be arranged to substantially circumscribe a second portion of the aerosol-forming substrate.

The aerosol-generating article may comprise an outer wrapper. The outer wrapper may be formed from paper. The outer wrapper may be gas permeable at the aerosol-generating segment. In particular, in embodiments comprising a plurality of aerosol-forming substrate, the outer wrapper may comprise perforations or other air inlets at the interface between adjacent aerosol-forming substrates. Where a separation is provided between adjacent aerosol-forming substrates, the outer wrapper may comprise perforations or other air inlets at the separation. This may enable an aerosol-forming substrate to be directly provided with air that has not been drawn through another aerosol-forming substrate. This may increase the amount of air received by each aerosol-forming substrate. This may improve the characteristics of the aerosol generated from the aerosol-forming substrate.

The aerosol- generating article may also comprise a separation between the aerosol-forming substrate and the filter plug. The separation may be about 18 millimetres, but may be in the range of about 5 millimetres to about 25 millimetres.

It should also be appreciated that particular combinations of the various features described above may be implemented, supplied, and used independently.

Embodiments of the present disclosure will now be described, by way of example only, with reference to the accompanying drawings, in which:
Figure 1 shows a schematic illustration of a susceptor arrangement according to an embodiment of this disclosure arranged between a pair of inductor coils;
Figure 2 shows a schematic illustration of a susceptor arrangement according to an embodiment of this disclosure arranged between a pair of inductor coils;
Figure 3 shows an exploded perspective view of a susceptor arrangement according to an embodiment of this disclosure;
Figure 4 shows a perspective view of the susceptor arrangement of Figure 3;
Figure 5 shows a cross-sectional view of an aerosol-generating system according to an embodiment of this disclosure, the aerosol-generating system comprising an aerosol-generating article, and an aerosol-generating device having an inductive heating arrangement;
Figure 6 a cross-sectional view of the proximal end of the aerosol-generating device of Figure 5;
Figure 7 shows a cross-sectional view of the aerosol-generating system of Figure 5, with the aerosol-generating article received in the aerosol-generating device;
Figure 8 shows a schematic illustration of a susceptor arrangement according to an embodiment of this disclosure arranged between a pair of inductor coils;
Figure 9 shows a cross-sectional view of an aerosol-generating system according to another embodiment of this disclosure, the aerosol-generating system comprising an aerosol-generating article, and an aerosol-generating device having an inductive heating arrangement;
Figure 10 shows a graph of temperature over time for the susceptor arrangement of Figure 8;
Figure 11 shows an illustrative circuit of an inductive heating arrangement;
Figure 12 shows an illustrative circuit for controlling the inductive heating arrangement; and
Figure 13 shows an illustration of pulse width modulated signals for driving the inductive heating arrangement.

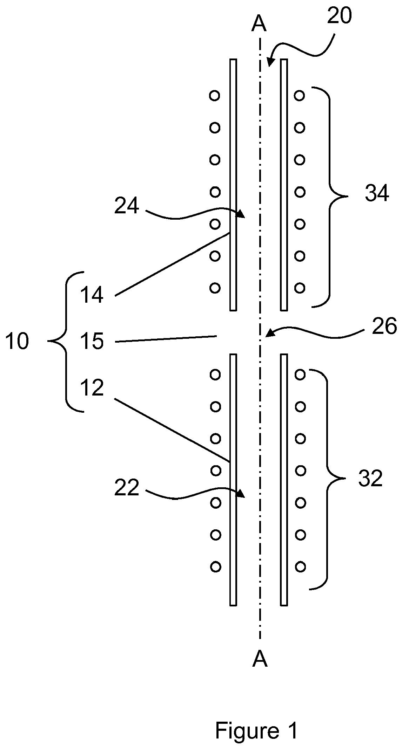

Figure 1 shows a schematic illustration of a susceptor arrangement 10 according to an embodiment of this disclosure. The susceptor arrangement 10 is an elongate, tubular element, having a circular transverse cross-section. The susceptor arrangement 10 comprises a first susceptor 12, a second susceptor 14, and a separation 15 between the first susceptor 12 and the second susceptor 14. The first susceptor 12 and the second susceptor 14 are each elongate, tubular elements having a circular transverse cross-section. The first susceptor 12 and the second susceptor 14 are coaxially aligned, end-to-end, along a longitudinal axis A-A.

The susceptor arrangement 10 comprises a cylindrical cavity 20, open at both ends, defined by an inner surfaces of the first susceptor 12 and the second susceptor 14. The cavity 20 is configured to receive a portion of a cylindrical aerosol-generating article (not shown), comprising an aerosol-forming substrate, such that an outer surface of the aerosol-generating article may be heated by the first susceptor and the second susceptor, thereby heating the aerosol-forming substrate.

The cavity 20 comprises three portions, a first portion 22 at a first end, defined by an inner surface of the tubular first susceptor 12, a second portion 24 at a second end, opposite the first end, defined by an inner surface of the tubular second susceptor 14, and an intermediate portion 26, bounded by the separation 15 between the first susceptor 12 and the second susceptor 14. The first susceptor 12 is arranged to heat a first portion of an aerosol-generating article received in the first portion 22 of the cavity 20, and the second susceptor 14 is arranged to heat a second portion of an aerosol-generating article received in the second portion 24 of the cavity 20.

A first inductor coil 32 is disposed around the first susceptor 12, and extends substantially the length of the first susceptor 12. As such, the first susceptor 12 is circumscribed by the first inductor coil 32 substantially along its length. When a varying electric current, preferably an AC current, is supplied to the first inductor coil 32, the first inductor coil 32 generates a varying magnetic field that is concentrated in the first portion 22 of the cavity 20. Such a varying magnetic field generated by the first inductor coil 32 induces eddy currents in the first susceptor 12, causing the first susceptor 12 to be heated.

A second inductor coil 34 is disposed around the second susceptor 14, and extends substantially the length of the second susceptor 14. As such, the second susceptor 14 is circumscribed by the second inductor coil 34 substantially along its length. When a varying electric current, preferably an AC current, is supplied to the second inductor coil 34, the second inductor coil 34 generates a varying magnetic field that is concentrated in the second portion 24 of the cavity 20. Such a varying magnetic field generated by the second inductor coil 34 induces eddy currents in the second susceptor 14, causing the second susceptor 14 to be heated.

The separation 15 between the first susceptor 12 and the second susceptor 14 provides a space between the first susceptor 12 and the second susceptor 14 that is not heated by induction when exposed to a varying magnetic field generated by either the first inductor coil 32 or the second inductor coil 34. Furthermore, the separation 15 thermally insulates the second susceptor 14 from the first susceptor 12, such that there is a reduced rate of heat transfer between the first susceptor 12 and the second susceptor 14, compared to a susceptor arrangement in which the first susceptor and the second susceptor are arranged adjacent each other, in direct thermal contact. As a result, providing the separation 15 between the first susceptor 12 and the second susceptor 14 enables selective heating of the first portion 22 of the cavity 20 by the first susceptor 12 with minimal heating of the second portion 24 of the cavity 20, and enables selective heating of the second portion 24 of the cavity 20 by the second susceptor 14 with minimal heating of the first portion 22 of the cavity 20.

The first susceptor 12 and the second susceptor 14 may be heated simultaneously by simultaneously supplying a varying electric current, preferably an AC current, to the first inductor coil 32 and the second inductor coil 34. Alternatively, the first susceptor 12 and the second susceptor 14 may be heated independently or alternately by supplying a varying electric current, preferably an AC current, to the first inductor coil 32 without supplying a current to the second inductor coil 34, and by subsequently supplying a varying electric current, preferably an AC current, to the second inductor coil 34 without supplying a current to the first inductor coil 32. It is also envisaged that a varying electric current, preferably an AC current, may be supplied to the first inductor coil 32 and the second inductor coil 34 in a sequence.

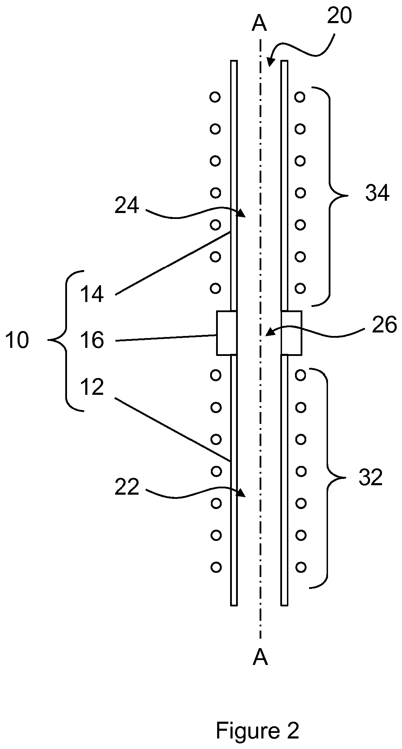

Figure 2 shows a schematic illustration of a susceptor arrangement according to another embodiment of this disclosure. The susceptor arrangement shown in Figure 2 is substantially identical to the susceptor arrangement shown in Figure 1, and like reference numerals are used to describe like features.

The susceptor arrangement 10 of Figure 2 is an elongate, tubular element, having a circular transverse cross-section. The susceptor arrangement 10 comprises a first susceptor 12, a second susceptor 14. The difference between the susceptor arrangement 10 of Figure 1 and the susceptor arrangement 10 of Figure 2 is that the susceptor arrangement 10 of Figure 2 comprises an intermediate element 16 disposed between the first susceptor 12 and the second susceptor 14. In the embodiment of Figure 2, there is still a separation between the first susceptor 12 and the second susceptor 14, however, the separation is filled by the intermediate element 16. In this embodiment, the intermediate element 16 is secured to an end of the first susceptor 12 and is also secured to an end of the second susceptor 14. Securing the intermediate element 16 to an end of the first susceptor 12, and securing the intermediate element 16 to an end of the second susceptor 14, indirectly connects the first susceptor 12 to the second susceptor 14. Advantageously, indirectly securing the first susceptor 12 to the second susceptor 14 enables the susceptor arrangement to form a unitary structure.

The intermediate element 16 comprises a thermally insulative material. The thermally insulative material is also electrically insulative. In this embodiment, the intermediate element 16 is formed from a polymeric material, such as PEEK. As such, the intermediate element 16 between the first susceptor 12 and the second susceptor 14 provides a space between the first susceptor 12 and the second susceptor 14 that is not heated by induction when exposed to a varying magnetic field generated by either the first inductor coil 32 or the second inductor coil 34. Furthermore, the intermediate element 16 thermally insulates the second susceptor 14 from the first susceptor 12, such that there is a reduced rate of heat transfer between the first susceptor 12 and the second susceptor 14, compared to a susceptor arrangement in which the first susceptor and the second susceptor are arranged adjacent each other, in direct thermal contact. The intermediate element 16 may also further reduce the rate of heat transfer between the first susceptor 12 and the second susceptor 14 compared to the separation 15 of the susceptor arrangement 10 of Figure 1. As a result, providing the intermediate element 16 between the first susceptor 12 and the second susceptor 14 enables selective heating of the first portion 22 of the cavity 20 by the first susceptor 12 with minimal heating of the second portion 24 of the cavity 20, and enables selective heating of the second portion 24 of the cavity 20 by the second susceptor 14 with minimal heating of the first portion 22 of the cavity 20.

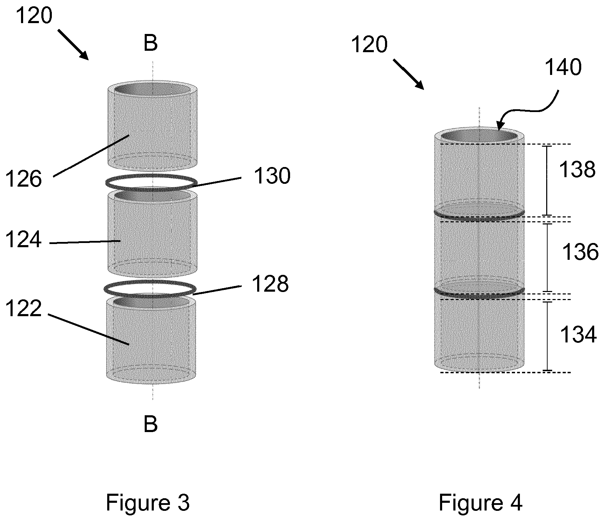

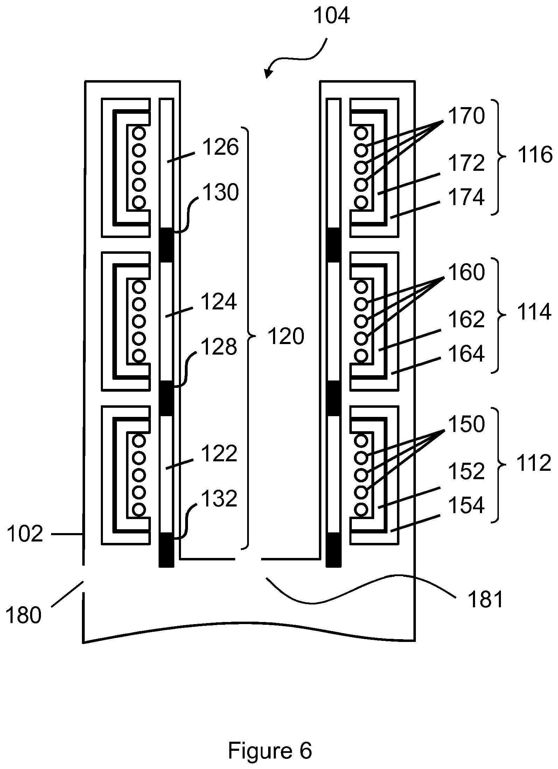

Figures 3 to 7 show schematic illustrations of an aerosol-generating system according to an embodiment of the present disclosure. The aerosol-generating system comprises an aerosol-generating device 100 and an aerosol-generating article 200. The aerosol-generating device 100 comprises an inductive heating arrangement 110 according to the present disclosure. The inductive heating arrangement 110 comprises a susceptor arrangement 120 according to the present disclosure.

Figures 3 and 4 show schematic illustrations of the susceptor arrangement 120. The susceptor arrangement 120 comprises: a first susceptor 122, a second susceptor 124, a third susceptor 126, a first intermediate element 128 and a second intermediate element 130. The first intermediate element 128 is disposed between the first susceptor 122 and the second susceptor 124. The second intermediate element 130 is disposed between the second susceptor 124 and the third susceptor 126.

In this embodiment, each of the first susceptor 122, the second susceptor 124 and the third susceptor 126 are identical. Each susceptor 122, 124, 126 is an elongate tubular susceptor, defining an inner cavity. Each susceptor, and its corresponding inner cavity, are substantially cylindrical, having a circular transverse cross-section that is constant along the length of the susceptor. The inner cavity of the first susceptor 122 defines a first region 134. The inner cavity of the second susceptor 124 defines a second region 136. The inner cavity of the third susceptor defines a third region 138.

Similarly, the first intermediate element 128 and the second intermediate element 130 are identical. The intermediate elements 128, 130 are tubular, defining an inner cavity. Each intermediate element 128, 130 is substantially cylindrical, having a circular transverse cross-section that is constant along the length of the intermediate element. The outer diameter of the intermediate elements 128, 130 is identical to the outer diameter of the susceptors 122, 124, 126, such that the outer surface of the intermediate elements 128, 130 may be aligned flush with the outer surface of the susceptors 122, 124, 126. The inner diameter of the intermediate elements 128, 130 is also identical to the inner diameter of the susceptors 122, 124, 126, such that the inner surface of the intermediate elements 128, 138 may be aligned flush with the inner surface of the susceptors 122, 124, 126.

The first susceptor 122, the first intermediate element 128, the second susceptor 124, the second intermediate element 130 and the third susceptor 126 are arranged end-to-end, and coaxially aligned on an axis B-B. In this arrangement, the susceptors 122, 124, 126 and the intermediate elements 128, 130 form a tubular, elongate, cylindrical structure. This structure forms the susceptor arrangement 120 in accordance with an embodiment of the present disclosure.

The elongate tubular susceptor arrangement 120 comprises an inner cavity 140. The susceptor arrangement cavity 140 is defined by the inner cavities of the susceptors 122, 124, 126 and the inner cavities of the intermediate elements 128, 130. The susceptor arrangement cavity 140 is configured to receive an aerosol-generating segment of the aerosol-generating article 200, as described in more detail below.

The intermediate elements 128, 130 are formed from an electrically insulative and thermally insulative material. As such, the susceptors 122, 124, 126 are substantially electrically and thermally insulated from each other. The material of the intermediate elements 128, 130 is also substantially impermeable to gas. In this embodiment, the tubular susceptor arrangement 120 is substantially impermeable to gas from an outer surface to an inner surface defining the susceptor arrangement cavity 140.

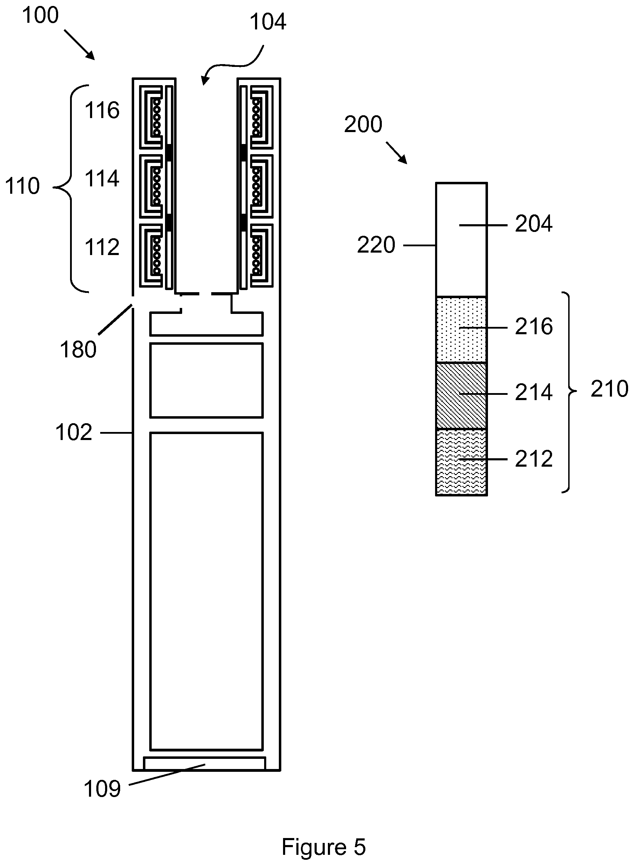

Figures 5, 6 and 7 show schematic cross-sections of the aerosol-generating device 100 and the aerosol-generating article 200.

The aerosol-generating device 100 comprises a substantially cylindrical device housing 102, with a shape and size similar to a conventional cigar. The device housing 102 defines a device cavity 104 at a proximal end. The device cavity 104 is substantially cylindrical, open at a proximal end, and substantially closed at a distal end, opposite the proximal end. The device cavity 104 is configured to receive the aerosol-generating segment 210 of the aerosol-generating article 200. Accordingly, the length and diameter of the device cavity 104 are substantially similar to the length and diameter of the aerosol-generating segment 210 of the aerosol-generating article 200.

The aerosol-generating device 100 further comprises a power supply 106, in the form of a rechargeable nickel-cadmium battery, a controller 108 in the form of a printed circuit board including a microprocessor, an electrical connector 109, and the inductive heating arrangement 110. The power supply 106, controller 108 and inductive heating arrangement 110 are all housed within the device housing 102. The inductive heating arrangement 110 of the aerosol-generating device 100 is arranged at the proximal end of the device 100, and is generally disposed around the device cavity 104. The electrical connector 109 is arranged at a distal end of the device housing 109, opposite the device cavity 104.

The controller 108 is configured to control the supply of power from the power supply 106 to the inductive heating arrangement 110. The controller 108 further comprises a DC/AC inverter, including a Class-D power amplifier, and is configured to supply a varying current, preferably an AC current, to the inductive heating arrangement 110. Additionally, or alternatively, the DC/AC inverter may comprise at least one of a Class-C and a Class-E power amplifier. The controller 108 is also configured to control recharging of the power supply 106 from the electrical connector 109. In addition, the controller 108 comprises a puff sensor (not shown) configured to sense when a user is drawing on an aerosol-generating article received in the device cavity 104.

The inductive heating arrangement 110 comprises three inductive heating units, including a first inductive heating unit 112, a second inductive heating unit 114 and a third inductive heating unit 116. The first inductive heating unit 112, second inductive heating unit 114 and third inductive heating unit 116 are substantially identical.

The first inductive heating unit 112 comprises a cylindrical, tubular first inductor coil 150, a cylindrical, tubular first flux concentrator 152 disposed about the first inductor coil 150 and a cylindrical, tubular first inductor unit housing 154 disposed about the first flux concentrator 152.

The second inductive heating unit 114 comprises a cylindrical, tubular second inductor coil 160, a cylindrical, tubular second flux concentrator 162 disposed about the second inductor coil 160 and a cylindrical, tubular second inductor unit housing 164 disposed about the second flux concentrator 162.

The third inductive heating unit 116 comprises a cylindrical, tubular third inductor coil 170, a cylindrical, tubular third flux concentrator 172 disposed about the third inductor coil 170 and a cylindrical, tubular third inductor unit housing 174 disposed about the third flux concentrator 172.

Accordingly, each inductive heating unit 112, 114, 116 forms a substantially tubular unit with a circular transverse cross-section. In each inductive heating unit 112, 114, 116, the flux concentrator extends over the proximal and distal ends of the inductor coil, such that the inductor coil is arranged within an annular cavity of the flux concentrator. Similarly, each inductive heating unit housing extends over the proximal and distal ends of the flux concentrator, such that the flux concentrator and inductor coil are arranged within an annular cavity of the inductive heating unit housing. This arrangement enables the flux concentrator to concentrate the magnetic field generated by the inductor coil in the inner cavity of the inductor coil. This arrangement also enables the inductor unit housing to retain the flux concentrator and inductor coil within the inductor unit housing.

The inductive heating arrangement 110 further comprises the susceptor arrangement 120. The susceptor arrangement 120 is disposed about the inner surface of the device cavity 104. In this embodiment, the device housing 102 defines an inner surface of the device cavity 104. However, it is envisaged that in some embodiments the inner surface of the device cavity is defined by the inner surface of the susceptor arrangement 120.

The inductive heating units 112, 114, 116 are disposed about the susceptor arrangement 120, such that the susceptor arrangement 120 and the inductive heating units 112, 114, 116 are concentrically arranged about the device cavity 104. The first inductive heating unit 112 is disposed about the first susceptor 122, at a distal end of the device cavity 104. The second inductive heating unit 114 is disposed about the second susceptor 124, at a central portion of the device cavity 104. The third inductive heating unit 116 is disposed about the third susceptor 126, at a proximal end of the device cavity 104. It is envisaged that in some embodiments the flux concentrators may also extend into the intermediate elements of the susceptor arrangement, in order to further distort the magnetic fields generated by the inductor coils towards the susceptors.

The first inductor coil 150 is connected to the controller 108 and the power supply 106, and the controller 108 is configured to supply a varying electric current, preferably an AC current, to the first inductor coil 150. When a varying electric current, preferably an AC current, is supplied to the first inductor coil 150, the first inductor coil 150 generates a varying magnetic field, which heats the first susceptor 122 by induction.

The second inductor coil 160 is connected to the controller 108 and the power supply 106, and the controller 108 is configured to supply a varying electric current, preferably an AC current, to the second inductor coil 160. When a varying electric current, preferably an AC current, is supplied to the second inductor coil 160, the second inductor coil 160 generates a varying magnetic field, which heats the second susceptor 124 by induction.

The first inductor coil 170 is connected to the controller 108 and the power supply 106, and the controller 108 is configured to supply a varying electric current, preferably an AC current, to the third inductor coil 170. When a varying electric current, preferably an AC current, is supplied to the third inductor coil 170, the third inductor coil 170 generates a varying magnetic field, which heats the third susceptor 126 by induction.

The device housing 102 also defines an air inlet 180 in close proximity to the distal end of the device cavity 106. The air inlet 180 is configured to enable ambient air to be drawn into the device housing 102. An airflow pathway 181 is defined through the device, between the air inlet 180 and an air outlet in the distal end of the device cavity 104, to enable air to be drawn from the air inlet 180 into the device cavity 104.

The aerosol-generating article 200 is generally in the form of a cylindrical rod, having a diameter similar to the inner diameter of the device cavity 104. The aerosol-generating article 200 comprises a cylindrical cellulose acetate filter plug 204 and a cylindrical aerosol-generating segment 210 wrapped together by an outer wrapper 220 of cigarette paper.

The filter plug 204 is arranged at a proximal end of the aerosol-generating article 200, and forms the mouthpiece of the aerosol-generating system on which a user draws to receive aerosol generated by the system.

The aerosol-generating segment 210 is arranged at a distal end of the aerosol-generating article 200, and has a length substantially equal to the length of the device cavity 104. The aerosol-generating segment 210 comprises a plurality of aerosol-forming substrates, including: a first aerosol-forming substrate 212 at a distal end of the aerosol-generating article 200, a second aerosol-forming substrate 214 adjacent the first aerosol-forming substrate 212, and a third aerosol-forming substrate 216 at a proximal end of the aerosol-generating segment 210, adjacent the second aerosol-forming substrate 216. It will be appreciated that in some embodiments two or more of the aerosol-forming substrates may be formed from the same materials. However, in this embodiment each of the aerosol-forming substrates 212, 214, 216 is different. The first aerosol-forming substrate 212 comprises a gathered and crimped sheet of homogenised tobacco material, without additional flavourings. The second aerosol-forming substrate 214 comprises a gathered and crimped sheet of homogenised tobacco material including a flavouring in the form of menthol. The third aerosol-forming substrate comprises a flavouring in the form of menthol, and does not comprise tobacco material or any other source of nicotine. Each of the aerosol-forming substrates 212, 214, 216 also comprises further components, such as one or more aerosol formers and water, such that heating the aerosol-forming substrate generates an aerosol with desirable organoleptic properties.

The proximal end of the first aerosol-forming substrate 212 is exposed, as it is not covered by the outer wrapper 220. In this embodiment, air is able to be drawn into the aerosol-generating segment 210 via the proximal end of the first aerosol-forming substrate 212, at the proximal end of the article 200.

In this embodiment, the first aerosol-forming substrate 212, the second aerosol-forming substrate 214 and the third aerosol-forming substrate 216 are arranged end-to-end. However, it is envisaged that in other embodiments, a separation may be provided between the first aerosol-forming substrate and the second aerosol-forming substrate, and a separation may be provided between the second aerosol-forming substrate and the third aerosol-forming substrate.

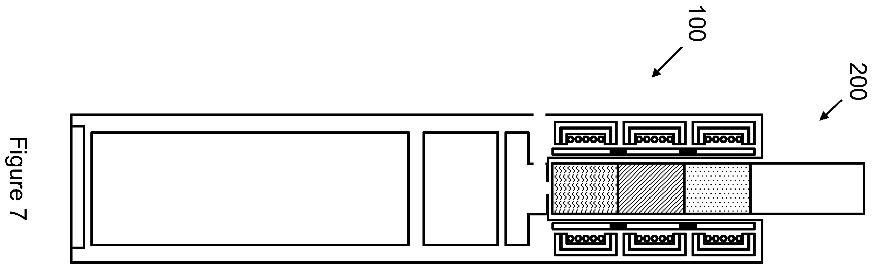

As shown in Figure 7, when the aerosol-generating segment 210 of the aerosol-generating article 200 is received in the device cavity 104, the length of the first aerosol-forming substrate 212 is such that the first aerosol-forming substrate 212 extends from the distal end of the device cavity 104, through the first region 134 of the first susceptor 122, and to the first intermediate member 128. The length of the second aerosol-forming substrate 214 is such that the second aerosol-forming substrate 214 extends from the first intermediate member 128, through the second region 136 of the second susceptor 124, and to the second intermediate member 130. The length of the third aerosol-forming substrate 216 is such that the third aerosol-forming substrate 216 extends from the second intermediate member 130 to the proximal end of the device cavity 104.

In use, when an aerosol-generating article 200 is received in the device cavity 104, a user may draw on the proximal end of the aerosol-generating article 200 to inhale aerosol generated by the aerosol-generating system. When a user draws on the proximal end of the aerosol-generating article 200, air is drawn into the device housing 102 at the air inlet 180, and is drawn along the airflow pathway 181, into the device cavity 104. The air is drawn into the aerosol-generating article 200 at the proximal end of the first aerosol-forming substrate 212 through the outlet in the distal end of the device cavity 104.

In this embodiment, the controller 108 of the aerosol-generating device 100 is configured to supply power to the inductor coils of the inductive heating arrangement 110 in a predetermined sequence. The predetermined sequence comprises supplying a varying electric current, preferably an AC current, to the first inductor coil 150 during a first draw from the user, subsequently supplying a varying electric current, preferably an AC current, to the second inductor coil 160 during a second draw from the user, after the first draw has finished, and subsequently supplying a varying electric current, preferably an AC current, to the third inductor coil 170 during a third draw from the user, after the second draw has finished. On the fourth draw, the sequence starts again at the first inductor coil 150. This sequence results in heating of the first aerosol-forming substrate 212 on a first puff, heating of the second aerosol-forming substrate 214 on a second puff, and heating of the third aerosol-forming substrate 216 on a third puff. Since the aerosol forming substrates 212, 214, 216 of the article 100 are all different, this sequence results in a different experience for a user on each puff on the aerosol-generating system.

It will be appreciated that the controller 108 may be configured to supply power to the inductor coils in a different sequence, or simultaneously, depending on the desired delivery of aerosol to the user. In some embodiments, the aerosol-generating device may be controllable by the user to change the sequence.

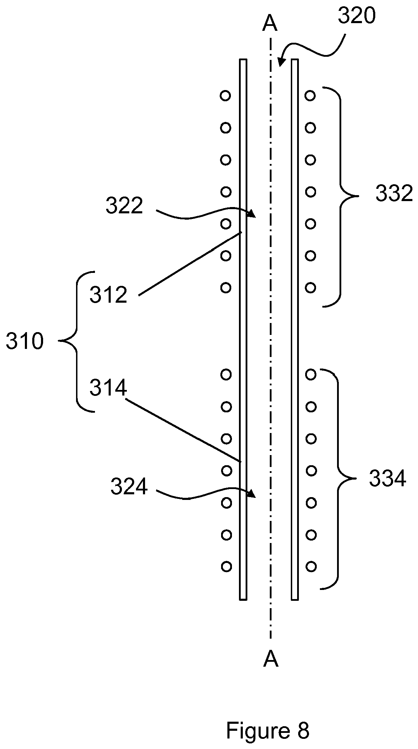

Figure 8 shows a schematic illustration of a susceptor arrangement 310 according to an embodiment of this disclosure. The susceptor arrangement 310 is an elongate, tubular element, having a circular transverse cross-section. The susceptor arrangement 310 comprises a single elongate susceptor, having a first portion 312 and a second portion 314. The first portion 312 and the second portion 314 are each elongate, tubular elements having a circular transverse cross-section. The first portion 312 and the second portion 314 are coaxially aligned, end-to-end, along a longitudinal axis A-A.

The susceptor arrangement 310 comprises a cylindrical cavity 320, open at both ends, defined by an inner surfaces of the first portion 312 and the second portion 314. The cavity 320 is configured to receive a portion of a cylindrical aerosol-generating article (not shown), comprising an aerosol-forming substrate, such that an outer surface of the aerosol-generating article may be heated by the first susceptor and the second susceptor, thereby heating the aerosol-forming substrate.

The cavity 320 is configured to receive a portion of an aerosol-generating article comprising an aerosol-forming substrate.

The cavity 320 comprises two portions, a first portion 322 at a first end, defined by an inner surface of the first portion 312 of the susceptor arrangement 310, and a second portion 324 at a second end, opposite the first end, defined by an inner surface of the second portion 314 of the susceptor arrangement 310. The first portion 312 of the susceptor arrangement 310 is arranged to heat a first portion of an aerosol-generating article received in the first portion 322 of the cavity 320, and the second portion 314 of the susceptor arrangement 310 is arranged to heat a second portion of an aerosol-generating article received in the second portion 324 of the cavity 320.

A first inductor coil 332 is disposed around the first portion 312 of the susceptor arrangement 310, and extends substantially the length of the first portion 312 of the susceptor arrangement 310. As such, the first portion 312 of the susceptor arrangement 310 is circumscribed by the first inductor coil 332 substantially along its length. When a varying electric current, preferably an AC current, is supplied to the first inductor coil 332, the first inductor coil 332 generates a varying magnetic field that is concentrated in the first portion 322 of the cavity 320. Such a varying magnetic field generated by the first inductor coil 332 induces eddy currents in the first portion 312 of the susceptor arrangement 310, causing the first portion 312 of the susceptor arrangement 310 to be heated.

A second inductor coil 334 is disposed around the second portion 314 of the susceptor arrangement 310, and extends substantially the length of the second portion 314 of the susceptor arrangement 310. As such, the second portion 314 of the susceptor arrangement 310 is circumscribed by the second inductor coil 334 of the susceptor arrangement 310 substantially along its length. When a varying electric current, preferably an AC current, is supplied to the second inductor coil 334, the second inductor coil 334 generates a varying magnetic field that is concentrated in the second portion 324 of the cavity 320. Such a varying magnetic field generated by the second inductor coil 334 induces eddy currents in the second portion 314 of the susceptor arrangement 310, causing the second susceptor 314 to be heated.

The first portion 312 of the susceptor arrangement 310 and the second portion 314 of the susceptor arrangement 310 may be heated simultaneously by simultaneously supplying a varying electric current, preferably an AC current, to the first inductor coil 332 and the second inductor coil 334. Alternatively, the first portion 312 of the susceptor arrangement 310 and the second portion 314 of the susceptor arrangement 310 may be heated independently or alternately by supplying a varying electric current, preferably an AC current, to the first inductor coil 332 without supplying a current to the second inductor coil 334, and by subsequently supplying a varying electric current, preferably an AC current, to the second inductor coil 334 without supplying a current to the first inductor coil 332. It is also envisaged that a varying electric current, preferably an AC current, may be supplied to the first inductor coil 332 and the second inductor coil 334 in a sequence.

Temperature sensors, in the form of thermocouples, are also provided on outer surfaces of the susceptor arrangement 310. A first thermocouple 342 is provided on an outer surface of the first portion 312 of the susceptor arrangement 310 to sense the temperature of the first portion 312 of the susceptor arrangement 310. A second thermocouple 344 is provided on an outer surface of the second portion 314 of the susceptor arrangement 310 to sense the temperature of the second portion 314 of the susceptor arrangement 310.

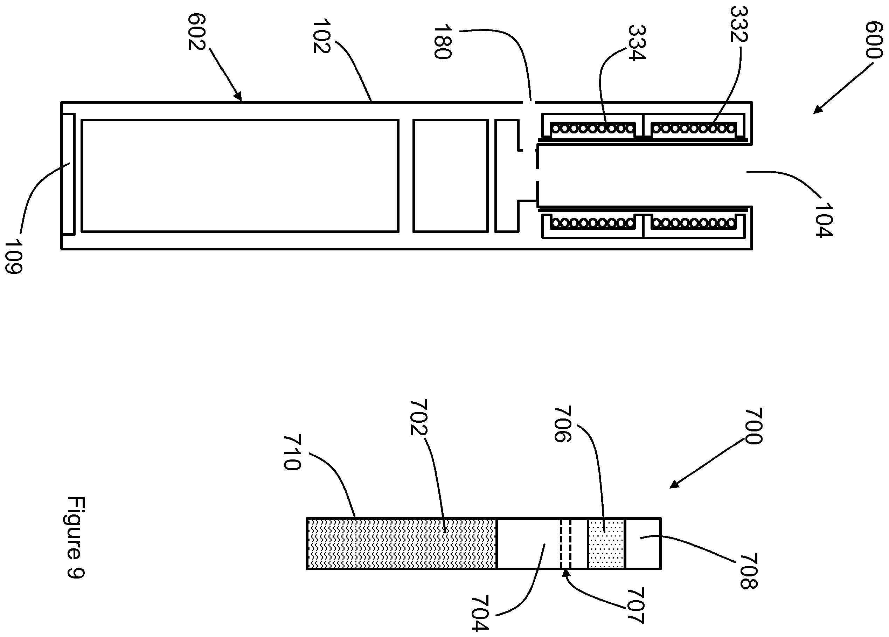

Figure 9 shows a cross-sectional view of an aerosol-generating system 600 according to another embodiment of the present disclosure. The aerosol-generating system 600 comprises an aerosol-generating device 602 comprising the susceptor arrangement 310, the first inductor coil 332 and the second inductor coil 334 of Figure 8. The aerosol-generating device 602 is similar to the aerosol-generating device 100 of Figure 5 and like reference numerals are used to designate like parts.

The aerosol-generating system 600 also comprises an aerosol-generating article 700. The aerosol-generating article 700 comprises an aerosol-forming substrate 702 in the form of a cylindrical rod and comprising tobacco strands made from homogenised tobacco and an aerosol former. The cylindrical rod of aerosol-forming substrate 702 has a length substantially equal to the length of the device cavity 104. The aerosol-generating article 700 also comprises a tubular cooling segment 704, a filter segment 706, and a mouth end segment 708. The aerosol-forming substrate 702, the tubular cooling segment 704, the filter segment 706 and the mouth end segment 708 are held together by an outer wrapper 710.

In one example, the aerosol-forming substrate 702 is between 34 millimetres and 50 millimetres in length, more preferably, the aerosol-forming substrate 702 is between 38 millimetres and 46 millimetres in length, more preferably still, the aerosol-forming substrate 702 is 42 millimetres in length.

In one example, the total length of the article 700 is between 71 millimetres and 95 millimetres, more preferably, the total length of the article 700 is between 79 millimetres and 87 millimetres, more preferably still, the total length of the article 700 is 83 millimetres.

In one example, the cooling segment 704 is an annular tube and defines an air gap within the cooling segment 704. The air gap provides a chamber for heated volatilised components generated from the aerosol-forming substrate 702 to flow. The cooling segment 704 is hollow to provide a chamber for aerosol accumulation yet rigid enough to withstand axial compressive forces and bending moments that might arise during manufacture and whilst the article 700 is in use during insertion into the aerosol-generating device 602. In one example, the thickness of the wall of the cooling segment 704 is approximately 0.29 millimetres.

The cooling segment 704 provides a physical displacement between the aerosol-forming substrate 702 and the filter segment 706. The physical displacement provided by the cooling segment 704 provides a thermal gradient across the length of the cooling segment 704 during use. In one example the cooling segment 704 is configured to provide a temperature differential of at least 40 degrees Celsius between a heated volatilised component entering a distal end of the cooling segment 704 and a heated volatilised component exiting a proximal end of the cooling segment 704. In one example the cooling segment 704 is configured to provide a temperature differential of at least 60 degrees Celsius between a heated volatilised component entering a distal end of the cooling segment 704 and a heated volatilised component exiting a proximal end of the cooling segment 704. This temperature differential across the length of the cooling element 704 protects the temperature sensitive filter segment 706 from the high temperatures of the aerosol formed from the aerosol-forming substrate 702.

In one example, the length of the cooling segment 704 is at least 15 millimetres. In one example, the length of the cooling segment 704 is between 20 millimetres and 30 millimetres, more particularly 23 millimetres to 27 millimetres, more particularly 25 millimetres to 27 millimetres and more particularly 25 millimetres.

The cooling segment 704 is made of paper. In one example, the cooling segment 704 is manufactured from a spirally wound paper tube which provides a hollow internal chamber yet maintains mechanical rigidity. Spirally wound paper tubes are able to meet the tight dimensional accuracy requirements of high-speed manufacturing processes with respect to tube length, outer diameter, roundness and straightness. In another example, the cooling segment 704 is a recess created from stiff plug wrap or tipping paper. The stiff plug wrap or tipping paper is manufactured to have a rigidity that is sufficient to withstand the axial compressive forces and bending moments that might arise during manufacture and whilst the article 700 is in use during insertion into the aerosol-generating device 602.

For each of the examples of the cooling segment 704, the dimensional accuracy of the cooling segment is sufficient to meet the dimensional accuracy requirements of high-speed manufacturing process.

The filter segment 706 may be formed of any filter material sufficient to remove one or more volatilised compounds from heated volatilised components from the aerosol-forming substrate 702. In one example, the filter segment 706 is made of a mono-acetate material, such as cellulose acetate. The filter segment 706 provides cooling and irritation-reduction from the heated volatilised components without depleting the quantity of the heated volatilised components to an unsatisfactory level for a user.

The density of the cellulose acetate tow material of the filter segment 706 controls the pressure drop across the filter segment 706, which in turn controls the draw resistance of the article 700. Therefore the selection of the material of the filter segment 706 is important in controlling the resistance to draw of the article 700. In addition, the filter segment performs a filtration function in the article 700.

The presence of the filter segment 706 provides an insulating effect by providing further cooling to the heated volatilised components that exit the cooling segment 704. This further cooling effect reduces the contact temperature of the user's lips on the surface of the filter segment 706.

One or more flavours may be added to the filter segment 706 in the form of either direct injection of flavoured liquids into the filter segment 706 or by embedding or arranging one or more flavoured breakable capsules or other flavour carriers within the cellulose acetate tow of the filter segment 706. In one example, the filter segment 706 is between 6 millimetres to 10 millimetres in length, more preferably 8 millimetres.

The mouth end segment 708 is an annular tube and defines an air gap within the mouth end segment 708. The air gap provides a chamber for heated volatilised components that flow from the filter segment 706. The mouth end segment 708 is hollow to provide a chamber for aerosol accumulation yet rigid enough to withstand axial compressive forces and bending moments that might arise during manufacture and whilst the article is in use during insertion into the aerosol-generating device 602. In one example, the thickness of the wall of the mouth end segment 708 is approximately 0.29 millimetres.

In one example, the length of the mouth end segment 708 is between 6 millimetres to 10 millimetres and more preferably 8 millimetres.

The mouth end segment 708 may be manufactured from a spirally wound paper tube which provides a hollow internal chamber yet maintains critical mechanical rigidity. Spirally wound paper tubes are able to meet the tight dimensional accuracy requirements of high-speed manufacturing processes with respect to tube length, outer diameter, roundness and straightness.

The mouth end segment 708 provides the function of preventing any liquid condensate that accumulates at the exit of the filter segment 706 from coming into direct contact with a user.

It should be appreciated that, in one example, the mouth end segment 708 and the cooling segment 704 may be formed of a single tube and the filter segment 706 is located within that tube separating the mouth end segment 708 and the cooling segment 704.

Ventilation holes 707 are located in the cooling segment 704 to aid with the cooling of the article 700. In one example, the ventilation holes 707 comprise one or more rows of holes, and preferably, each row of holes is arranged circumferentially around the article 700 in a cross-section that is substantially perpendicular to a longitudinal axis of the article 700.

In one example, there are between one to four rows of ventilation holes 707 to provide ventilation for the article 700. Each row of ventilation holes 707 may have between 12 to 36 ventilation holes 707. The ventilation holes 707 may, for example, be between 100 to 500 micrometres in diameter. In one example, an axial separation between rows of ventilation holes 707 is between 0.25 millimetres and 0.75 millimetres, more preferably, an axial separation between rows of ventilation holes 707 is 0.5 millimetres.

In one example, the ventilation holes 707 are of uniform size. In another example, the ventilation holes 707 vary in size. The ventilation holes 707 can be made using any suitable technique, for example, one or more of the following techniques: laser technology, mechanical perforation of the cooling segment 704 or pre-perforation of the cooling segment 704 before it is formed into the article 700. The ventilation holes 707 are positioned so as to provide effective cooling to the article 700.

In one example, the rows of ventilation holes 707 are located at least 11 millimetres from the proximal end of the article 700, more preferably the ventilation holes 707 are located between 17 millimetres and 20 millimetres from the proximal end of the article 700. The location of the ventilation holes 707 is positioned such that user does not block the ventilation holes 707 when the article 700 is in use.

Advantageously, providing the rows of ventilation holes 707 between 17 millimetres and 20 millimetres from the proximal end of the article 700 enables the ventilation holes 707 to be located outside of the aerosol-generating device 602 when the article 700 is fully inserted in the aerosol-generating device 602. By locating the ventilation holes 707 outside of the device 602, non-heated air is able to enter the article 700 through the ventilation holes 707 from outside the device 602 to aid with the cooling of the article 700.

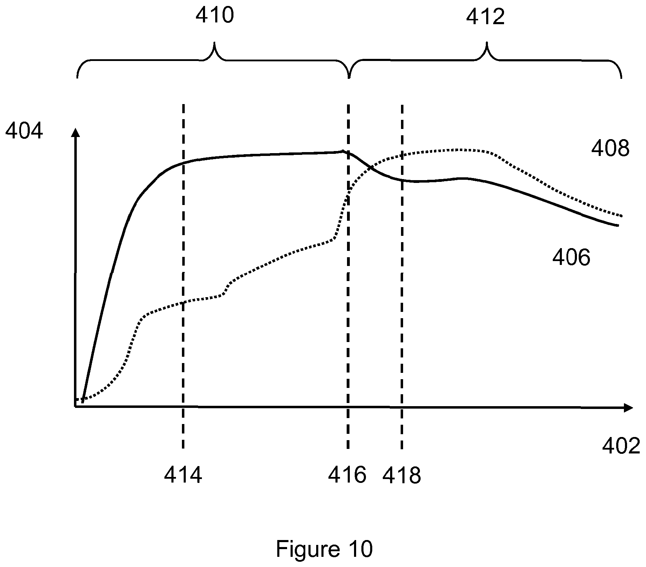

Figure 10 shows a graph of temperature 404 as a function of time 402 during one heating cycle for the first portion 312 of the susceptor arrangement 310, using readings from the first thermocouple 342, and the second portion of the susceptor arrangement 310, using readings from the second thermocouple 344. In Figure 10, the temperature of the first portion 312 of the susceptor arrangement 310, from the first thermocouple 342, is shown by the solid line 406. In Figure 10, the temperature of the second portion 314 of the susceptor arrangement 310, from the second thermocouple 344, is shown by the dashed line 408.

As shown in Figure 10, when heating is started, the first portion 312 of the susceptor arrangement 310 is heated quickly during a first phase 410, and reaches an operating temperature after a first period 414 of about 60 seconds. The second portion 314 of the susceptor arrangement 310 is heated during the first phase 410, but at a much slower rate than the first portion 312. The temperature of the first portion 312 of the susceptor arrangement 310 is greater than the temperature of the second portion 314 of the susceptor arrangement 310 throughout the first phase 410. The second portion 314 of the susceptor arrangement 310 does not reach an operating temperature during the first phase 410. In this embodiment, the operating temperature refers to the desired temperature at which the most desirable aerosol is released from the aerosol-forming substrate.

Also as shown in Figure 10, after a second period 416, of about 150 seconds from the start of heating, the first phase 410 ends, and a second phase 412 begins. In the second phase 412, the first portion 312 of the susceptor arrangement 312 is heated to a lower temperature, but still within about 50 degrees Celsius of the operating temperature. Also in the second phase 412, the second portion 314 of the susceptor arrangement 310 is heated quickly to the operating temperature, and reaches the operating temperature after a third period 418, of about 210 seconds from the start of heating.

In particular, Figure 10 shows a desirable temperature profile for an aerosol-generating system, wherein the first portion 312 of the susceptor arrangement 310 is arranged to heat a proximal portion of an aerosol-forming substrate, and the second portion 314 of the susceptor arrangement 310 is arranged to heat a distal portion of an aerosol-forming substrate. The proximal portion of the aerosol-forming substrate is closer to a mouthpiece end of an aerosol-generating article comprising the aerosol-forming substrate. Such a temperature profile across the aerosol-forming substrate enables an aerosol with desired characteristics to be generated throughout an entire, extended, aerosol-generating time period. Heating a proximal portion of an aerosol-forming substrate before heating a distal portion of the substrate facilitates optimum delivery of the generated aerosol to a user. In particular, it is believed that this is because the hot aerosol from the heated proximal portion of the aerosol-forming substrate does not interact with the non-heated distal portion of the aerosol-forming substrate during the first phase, and as such, the hot aerosol from the proximal portion does not release volatile compounds from the distal portion.

Such a temperature profile can be achieved by driving varying currents, preferably AC currents, in the first inductor coil 312 and the second inductor coil 314 in a variety of ways. For example, in the first phase, a first varying current, preferably an AC current, can be driven in the first inductor coil 312 at a first duty cycle, and a second varying current, preferably an AC current, can be driven in the second inductor coil 314, the duty cycle of the second varying current being less than the duty cycle of the first varying current, such that the current driven in the first inductor coil 312 is greater than the current driven in the second inductor coil 314 during the first phase. It will be appreciated that in some embodiments, a varying current is not supplied to the second inductor coil 314 in the first phase 410. In the second phase, the opposite may apply, such that the duty cycle of the first varying current is lower than the duty cycle of the second varying current.

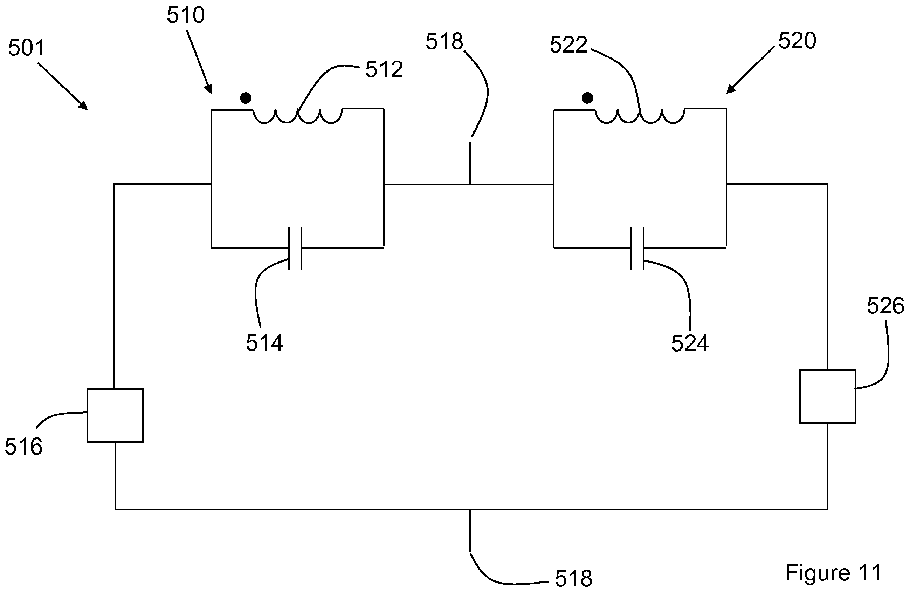

In figure 11, an inductive heating arrangement 501 is depicted. The inductive heating arrangement 501 comprises a first LC circuit 510. The first LC circuit 510 comprises a first inductor coil 512 and a first capacitor 514. The first inductor coil 512 has a first inductance. The first capacitor 514 has a first capacitance. The resonance frequency of the first LC circuit 510 is determined by the first inductance and the first capacitance.

Figure 11 further shows a first transistor 516, such as a FET, connected to the first LC circuit 510. Furthermore, terminals 518 of a DC power supply are depicted in figure 11. The terminals 518 of the DC power supply are connected with the power supply, preferably a battery, of the device. The first LC circuit 510 is configured to inductively heat a first portion of a susceptor arrangement. The first portion of the susceptor arrangement may be arranged adjacent to the first inductor coil so that the first inductor coil may heat the first portion of the susceptor element by one or both of eddy currents and hysteresis.

The inductive heating arrangement 501 of figure 11 also comprises a second LC circuit 520 comprising a second inductor coil 522 a second capacitor 524. A second transistor 526 is associated with the second LC circuit 520.

The first transistor 516 is configured for controlling operation of the first LC circuit 510. The second transistor 526 is configured for controlling operation of the second LC circuit 520.

The components of the second LC circuit 520 may be similar to the components of the first LC circuit 510. In other words, the second inductor coil 522 may have a second inductance, the second capacitor 524 may have a second capacitance and the second transistor 526 may be an FET. The two LC circuits 510, 520 may be connected to the DC power supply in parallel.

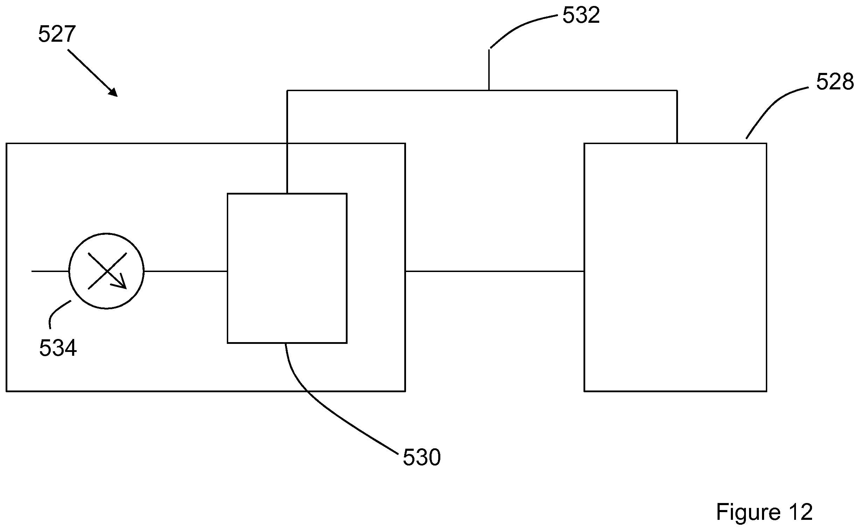

Figure 12 shows a controller 527 in addition to a power stage 528. The power stage 528 may comprise the first LC circuit 510 and the first transistor 516 as depicted in figure 11. The power stage 528 may alternatively all of the components depicted in figure 11. The controller 527 depicted in figure 12 may comprise an oscillator 530. The oscillator 530 may be connected to one or both of the first transistor 516 and the second transistor 526. A DC power supply 532 is also shown in figure 12. The DC power supply 532 may be utilized for powering the elements shown in figure 11. Additionally, the DC power supply 532 may be utilized to power the controller 527, preferably the oscillator 530.

The controller 527 further comprises a pulse width modulation module 534. The pulse width modulation module 534 may be configured to modulate the signal used for driving the LC circuits 510, 520. The controller 527 may be configured to drive the LC circuits 510, 520. In other words, the controller 527 may be configured to supply an electric signal to the LC circuits 510, 520.

The controller 527 may be configured to drive the first LC circuit 510 with an AC current of a first frequency. The first frequency may correspond to the resonance frequency of the first LC circuit 510. The controller 527 may be configured to drive a second LC circuit 520 with an AC current of a second frequency. The second frequency may correspond to the resonance frequency of the second LC circuit 520.

The resonance frequency of the first LC circuit 510 may be identical to the resonance frequency of the second LC circuit 520. In this scenario, the controller 527 may be configured to supply an AC current with a frequency corresponding to the resonance frequency of the first LC circuit 510 to the first LC circuit 510 during a first phase. The first phase may be a phase in which predominantly a first portion of the aerosol-forming substrate is to be heated by a first portion of the susceptor arrangement. During the first phase, the controller 527 may be configured to supply an AC current with a frequency different from the resonance frequency of the second LC circuit 520 to the second LC circuit 520. The second LC circuit 520 will consequently be heated to a lower temperature than the first LC circuit 510. In a second phase, in which predominantly a second portion of the aerosol-forming substrate is to be heated by a second portion of the susceptor arrangement, complementary AC currents may be supplied by the controller to the LC circuits 510, 520. In the second phase, an AC current corresponding to the resonance frequency of the second LC circuit 520 may be supplied to the second LC circuit 520 and an AC current with a frequency different from the resonance frequency of the first LC circuit 510 may be supplied to the first LC circuit 510.

The resonance frequency of the first LC circuit 510 may be different from the resonance frequency of the second LC circuit 520. In this case, during the first phase, the controller 527 may be configured to supply an AC current to the first LC circuit 510 with a frequency corresponding to the resonance frequency of the first LC circuit 510. An AC current with the same frequency may be supplied to the second LC circuit 520. Due to the resonance frequency of the second LC circuit 520 being different from the resonance frequency of the first LC circuit 510, the second LC circuit 520 may only heat the second portion of the susceptor arrangement to a lower temperature than the first LC circuit 510 heating first portion of the susceptor arrangement. In the second phase, in which heating of the second portion of the susceptor arrangement is desired, the controller 527 may be configured to supply an AC current with a frequency corresponding to the resonance frequency of the second LC circuit 520, while this AC current will lead to a lower heating of the first portion of the susceptor arrangement by the first LC circuit 510.

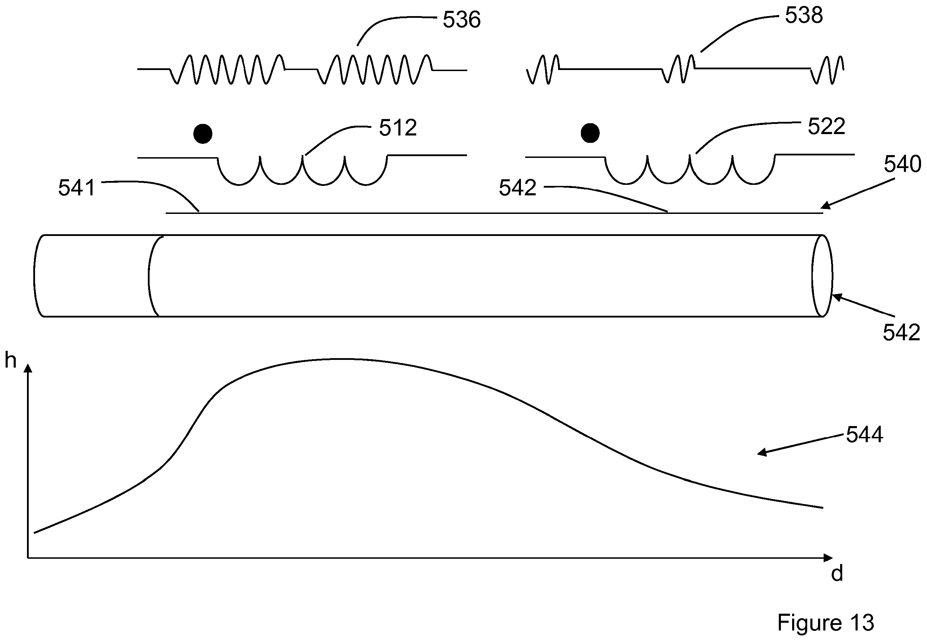

Figure 13 shows an embodiment in which the first LC circuit 510 is heated predominantly in the first phase, while the second LC circuit 520 is heated to a lower temperature during the first phase. This is reversed in the second phase, in which the first LC circuit 510 is heated to a lower temperature than the second LC circuit 520. To facilitate this, pulse width modulation is employed. In more detail, the top of figure 13 shows complementary duty cycles of a first alternating pulse width modulated signal (top left) and of a second alternating pulse width modulated signal (top right). The first alternating pulse width modulated signal will herein be denoted as first signal 536. The second alternating pulse width modulated signal will herein be denoted as second signal 538. The duty cycle refers to the percentage of on-time of the respective signal. As can be seen in figure 13, the first signal 536 has a high duty cycle of around 80%, while the second signal 538 has a low duty cycle of around 20%. The embodiment shown in figure 13 corresponds to the first phase, in which the first portion 541 of the susceptor arrangement 540 is predominantly heated, while the second portion 542 of the susceptor arrangement 540 is heated to a lower temperature. Below the signals shown in figure 13, the first inductor coil 512 and the second inductor coil 522 are depicted. Below the inductor coils 512, 522, the susceptor arrangement 540, comprising the first portion 541 and the second portion 542, is illustrated. Below the susceptor arrangement 540, an aerosol-generating article 542 comprising aerosol-forming substrate is shown. Below the aerosol-generating article 542, a diagram 544 is depicted showing heat over distance. The heat predominantly is high in the first portion 541 of the susceptor arrangement 540, while the heat is lower in the second portion 542 of the susceptor arrangement 540. During the second phase, the heating of the susceptor arrangement 540 will be different. During the second phase, the second LC circuit 520 will heat the second portion 542 of the susceptor arrangement 540 to a higher temperature and the temperature of the first portion 541 of the susceptor arrangement 540 will be lower than in the first phase. To facilitate this, pulse width modulation may be employed similar to the first phase. The duty cycle of the second signal 538 may be increased, while the duty cycle of the first signal 536 may be decreased. The degrees may be gradual from the first phase to the second phase. The duty cycle of the first signal 536 and the duty cycle of the second signal 538 may add up to 100%. Alternatively, the duty cycle of the first signal 536 and the duty cycle of the second signal 538 may add up to an amount lower than 100%. Exemplarily, in the first phase, the duty cycle of the first signal 536 may be above 50% such as 80% and the duty cycle of the second signal 538 may be close to 0% or 0%; and vice versa during the second phase.

It will be appreciated that the embodiments described above are specific examples only, and other embodiments are envisaged in accordance with this disclosure.

## Claims

1. An aerosol-generating device (602) comprising:
an inductive heating arrangement (501) configured to heat an aerosol-forming substrate (702), the inductive heating arrangement (501) comprising:
a susceptor arrangement (540) that is heatable by penetration with a varying magnetic field to heat the aerosol-forming substrate (702),
at least a first inductor coil (512), and
at least a second inductor coil (522), wherein the second inductor coil (522) has a different number of turns to the first inductor coil (512), and
a controller (527),
wherein the controller (527) is configured to drive the first inductor coil (512) with a first alternating pulse width modulated signal for generating a first alternating magnetic field for heating a first portion of the susceptor arrangement (540),
wherein the controller (527) is configured to drive the second inductor coil (522) with a second alternating pulse width modulated signal for generating a second alternating magnetic field for heating a second portion of the susceptor arrangement (540),
wherein the controller (527) is configured to supply the first alternating pulse width modulated signal and the second alternating pulse width modulated signal with complementary duty cycles,
wherein the controller (527) is configured to supply the first alternating pulse width modulated signal to the first inductor coil (512) during a first phase to increase the temperature of the first portion of the susceptor arrangement (540) from an initial temperature to a first operating temperature, wherein the controller (527) is configured to supply the first alternating pulse width modulated signal during the first phase with a duty cycle higher than 50%, preferably higher than 60%, preferably higher than 70%, more preferably higher than 80% and most preferably higher than 90%, and
wherein the controller (527) is configured to supply the first alternating pulse width modulated signal to the first inductor coil (512) during a second phase to decrease the temperature of the first portion of the susceptor arrangement (540) from the first operating temperature to a second operating temperature, wherein the controller (527) is configured to supply the first alternating pulse width modulated signal during the second phase with a duty cycle lower than 50%, preferably lower than 40%, preferably lower than 30%, more preferably lower than 20% and most preferably lower than 10%.

2. An aerosol-generating device (602) according to claim 1, wherein the controller (527) is configured to supply the second alternating pulse width modulated signal to the second inductor coil (522) during the first phase to increase the temperature of the second portion of the susceptor arrangement (540) from an initial temperature to a third operating temperature, lower than the first operating temperature, wherein the controller (527) is configured to supply the second alternating pulse width modulated signal during the first phase with a duty cycle lower than 50%, preferably lower than 40%, preferably lower than 30%, more preferably lower than 20% and most preferably lower than 10%.

3. An aerosol-generating device (602) according to claim 2, wherein the controller (527) is configured to supply the second alternating pulse width modulated signal to the second inductor coil (522) during the second phase to increase the temperature of the second portion of the susceptor arrangement (540) from the third operating temperature to a fourth operating temperature, higher than the second operating temperature, wherein the controller (527) is configured to supply the second alternating pulse width modulated signal during the second phase with a duty cycle higher than 50%, preferably higher than 60%, preferably higher than 70%, more preferably higher than 80% and most preferably higher than 90%.

4. An aerosol-generating device (602) according to any one of the preceding claims, wherein the aerosol-generating device (602) further comprises a power supply (532) for providing power to the inductive heating arrangement (501).

5. An aerosol-generating device (602) according to any one of the preceding claims, wherein the controller (527) comprises a microcontroller.

6. An aerosol-generating device (602) according to claim 5, wherein the microcontroller is configured to utilize the clock frequency of the microcontroller as one or both of the alternating frequency of the first alternating pulse width modulated signal and of the second alternating pulse width modulated signal.

7. An aerosol-generating device (602) according to any one of claims 1 to 5, wherein the aerosol-generating device (602), preferably the controller (527), further comprises an oscillator (530) for generating one or both of the alternating frequency of the first alternating pulse width modulated signal and of the second alternating pulse width modulated signal.

8. An aerosol-generating device (602) according to any one of the preceding claims, wherein the aerosol-generating device (602) further comprises a first power stage, the first power stage at least comprising the first inductor coil (512) and a first capacitor (514).

9. An aerosol-generating device (602) according to claim 8, wherein the first inductor coil (512) and the first capacitor (514) are arranged as a first LC circuit (510).

10. An aerosol-generating device (602) according to any one of the preceding claims, wherein the aerosol-generating device (602) further comprises a second power stage, the second power stage at least comprising the second inductor coil (522) and a second capacitor (524).

11. An aerosol-generating device (602) according to claim 10, wherein the second inductor coil (522) and the second capacitor (524) are arranged as a second LC circuit (520).

12. A method of controlling an aerosol-generating device (602), the aerosol-generating device (602) comprising:
an inductive heating arrangement (501) configured to heat an aerosol-forming substrate (702), the inductive heating arrangement (501) comprising:
a susceptor arrangement (540) that is heatable by penetration with a varying magnetic field to heat the aerosol-forming substrate (702),
at least a first inductor coil (512), and
at least a second inductor coil (522), wherein the second inductor coil (522) has a different number of turns to the first inductor coil (512), and
a controller (527), wherein the controller (527) is configured to drive the first inductor coil (512) and the second inductor coil (522),
the method comprising:
driving the first inductor coil (512) with a first alternating pulse width modulated signal to generate a first alternating magnetic field for heating a first portion of the susceptor arrangement (540),
driving the second inductor coil (522) with a second alternating pulse width modulated signal to generate a second alternating magnetic field for heating a second portion of the susceptor arrangement (540),
supplying of the first alternating pulse width modulated signal with a duty cycle complementary to the duty cycle of the second alternating pulse width modulated signal,
wherein the first alternating pulse width modulated signal is supplied to the first inductor coil (512) during a first phase to increase the temperature of the first portion of the susceptor arrangement (540) from an initial temperature to a first operating temperature, wherein the first alternating pulse width modulated signal is supplied during the first phase with a duty cycle higher than 50%,
preferably higher than 60%, preferably higher than 70%, more preferably higher than 80% and most preferably higher than 90%, and
wherein the first alternating pulse width modulated signal is supplied to the first inductor coil (512) during a second phase to decrease the temperature of the first portion of the susceptor arrangement (540) from the first operating temperature to a second operating temperature, wherein the first alternating pulse width modulated signal is supplied during the second phase with a duty cycle lower than 50%, preferably lower than 40%, preferably lower than 30%, more preferably lower than 20% and most preferably lower than 10%.

13. A method according to claim 12, wherein the second alternating pulse width modulated signal is supplied to the second inductor coil (522) during the first phase to increase the temperature of the second portion of the susceptor arrangement (540) from an initial temperature to a third operating temperature, wherein the second alternating pulse width modulated signal is supplied during the first phase with a duty cycle lower than 50%, preferably lower than 40%, preferably lower than 30%, more preferably lower than 20% and most preferably lower than 10%.

14. A method according to claim 13, wherein the second alternating pulse width modulated signal is supplied to the second inductor coil (522) during the second phase to increase the temperature of the second portion of the susceptor arrangement (540) from the third operating temperature to a fourth operating temperature, wherein the second alternating pulse width modulated signal is supplied during the second phase with a duty cycle higher than 50%, preferably higher than 60%, preferably higher than 70%, more preferably higher than 80% and most preferably higher than 90%.

15. An aerosol-generating system comprising an aerosol-generating device (602) according to any one of claims 1 to 11 and an aerosol-generating article (700) comprising an aerosol-forming substrate (702).

## Patentansprüche

1. Aerosolerzeugungsvorrichtung (602), umfassend:
eine induktive Heizanordnung (501), ausgelegt zum Erwärmen eines aerosolbildenden Substrats (702), wobei die induktive Heizanordnung (501) Folgendes umfasst:
eine Suszeptoranordnung (540), die durch Penetration mit einem variablen Magnetfeld zur Erwärmung des aerosolbildenden Substrats (702) erwärmbar ist,
wenigstens eine erste Induktorspule (512), und
wenigstens eine zweite Induktorspule (522), wobei die zweite Induktorspule (522) eine gegenüber der ersten Induktorspule (512) unterschiedliche Windungszahl aufweist, und
eine Steuerung (527),
wobei die Steuerung (527) zum Antrieb der ersten Induktorspule (512) mit einem ersten pulsweitenmodulierten Wechselsignal zum Erzeugen eines ersten magnetischen Wechselfelds zum Erwärmen eines ersten Abschnitts der Suszeptoranordnung (540) ausgelegt ist,
wobei die Steuerung (527) zum Antrieb der zweiten Induktorspule (522) mit einem zweiten pulsweitenmodulierten Wechselsignal zum Erzeugen eines zweiten magnetischen Wechselfelds zum Erwärmen eines zweiten Abschnitts der Suszeptoranordnung (540) ausgelegt ist,
wobei die Steuerung (527) zur Bereitstellung des ersten pulsweitenmodulierten Wechselsignals und des zweiten pulsweitenmodulierten Wechselsignals mit komplementären Tastverhältnissen ausgelegt ist,
wobei die Steuerung (527) zur Bereitstellung des ersten pulsweitenmodulierten Wechselsignals an die erste Induktorspule (512) während einer ersten Phase zur Erhöhung der Temperatur des ersten Abschnitts der Suszeptoranordnung (540) von einer Anfangstemperatur auf eine erste Betriebstemperatur ausgelegt ist, wobei die Steuerung (527) zur Bereitstellung des ersten pulsweitenmodulierten Wechselsignals während der ersten Phase mit einem Tastverhältnis von mehr als 50 %, bevorzugt mehr als 60 %, bevorzugt mehr als 70 %, stärker bevorzugt mehr als 80 % und am meisten bevorzugt mehr als 90 %, ausgelegt ist, und
wobei die Steuerung (527) zur Bereitstellung des ersten pulsweitenmodulierten Wechselsignals an die erste Induktorspule (512) während einer zweiten Phase zur Senkung der Temperatur des ersten Abschnitts der Suszeptoranordnung (540) von einer ersten Betriebstemperatur auf eine zweite Betriebstemperatur ausgelegt ist, wobei die Steuerung (527) zur Bereitstellung des ersten pulsweitenmodulierten Wechselsignals während der zweiten Phase mit einem Tastverhältnis von weniger als 50 %, bevorzugt weniger als 40 %, bevorzugt weniger als 30 %, stärker bevorzugt weniger als 20 % und am meisten bevorzugt weniger als 10 %, ausgelegt ist.

2. Aerosolerzeugungsvorrichtung (602) nach Anspruch 1, wobei die Steuerung (527) zur Bereitstellung des zweiten pulsweitenmodulierten Wechselsignals an die zweite Induktorspule (522) während der ersten Phase zur Erhöhung der Temperatur des zweiten Abschnitts der Suszeptoranordnung (540) von einer Anfangstemperatur auf eine dritte Betriebstemperatur ausgelegt ist, wobei die Steuerung (527) zur Bereitstellung des zweiten pulsweitenmodulierten Wechselsignals während der ersten Phase mit einem Tastverhältnis von weniger als 50 %, bevorzugt weniger als 40 %, bevorzugt weniger als 30 %, stärker bevorzugt weniger als 20 % und am meisten bevorzugt weniger als 10 %, ausgelegt ist.

3. Aerosolerzeugungsvorrichtung (602) nach Anspruch 2, wobei die Steuerung (527) zur Bereitstellung des zweiten pulsweitenmodulierten Wechselsignals an die zweite Induktorspule (522) während der zweiten Phase zur Erhöhung der Temperatur des zweiten Abschnitts der Suszeptoranordnung (540) von einer dritten Betriebstemperatur auf eine vierte Betriebstemperatur, die höher als die zweite Betriebstemperatur ist, ausgelegt ist, wobei die Steuerung (527) zur Bereitstellung des zweiten pulsweitenmodulierten Wechselsignals während der zweiten Phase mit einem Tastverhältnis von mehr als 50 %, bevorzugt mehr als 60 %, bevorzugt mehr als 70 %, stärker bevorzugt mehr als 80 % und am meisten bevorzugt mehr als 90 %, ausgelegt ist.

4. Aerosolerzeugungsvorrichtung (602) nach einem der vorhergehenden Ansprüche, wobei die Aerosolerzeugungsvorrichtung (602) ferner eine Energieversorgung (532) zum Bereitstellen von Energie an die induktive Heizanordnung (501) umfasst.

5. Aerosolerzeugungsvorrichtung (602) nach einem der vorhergehenden Ansprüche, wobei die Steuerung (527) einen Mikrocontroller umfasst.

6. Aerosolerzeugungsvorrichtung (602) nach Anspruch 5, wobei der Mikrocontroller zur Verwendung der Taktfrequenz des Mikrocontrollers als eine oder beide der Wechselfrequenzen des ersten pulsweitenmodulierten Wechselsignals und des zweiten pulsweitenmodulierten Wechselsignals ausgelegt ist.

7. Aerosolerzeugungsvorrichtung (602) nach einem der Ansprüche 1 bis 5, wobei die Aerosolerzeugungsvorrichtung (602), bevorzugt die Steuerung (527), ferner einen Oszillator (530) zum Erzeugen einer oder beider der Wechselfrequenzen des ersten pulsweitenmodulierten Wechselsignals und des zweiten pulsweitenmodulierten Wechselsignals umfasst.

8. Aerosolerzeugungsvorrichtung (602) nach einem der vorhergehenden Ansprüche, wobei die Aerosolerzeugungsvorrichtung (602) ferner eine erste Leistungsstufe umfasst, wobei die erste Leistungsstufe wenigstens die erste Induktorspule (512) und einen ersten Kondensator (514) umfasst.

9. Aerosolerzeugungsvorrichtung (602) nach Anspruch 8, wobei die erste Induktorspule (512) und der erste Kondensator (514) als ein erster LC-Schwingkreis (510) angeordnet sind.

10. Aerosolerzeugungsvorrichtung (602) nach einem der vorhergehenden Ansprüche, wobei die Aerosolerzeugungsvorrichtung (602) ferner eine zweite Leistungsstufe umfasst, wobei die zweite Leistungsstufe wenigstens die zweite Induktorspule (522) und einen zweiten Kondensator (524) umfasst.

11. Aerosolerzeugungsvorrichtung (602) nach Anspruch 10, wobei die zweite Induktorspule (522) und der zweite Kondensator (524) als ein zweiter LC-Schwingkreis (520) angeordnet sind.

12. Verfahren zum Regeln einer Aerosolerzeugungsvorrichtung (602), wobei die Aerosolerzeugungsvorrichtung (602) Folgendes umfasst:
eine induktive Heizanordnung (501), ausgelegt zum Erwärmen eines aerosolbildenden Substrats (702), wobei die induktive Heizanordnung (501) Folgendes umfasst:
eine Suszeptoranordnung (540), die durch Penetration mit einem variablen Magnetfeld zur Erwärmung des aerosolbildenden Substrats (702) erwärmbar ist,
wenigstens eine erste Induktorspule (512), und
wenigstens eine zweite Induktorspule (522), wobei die zweite Induktorspule (522) eine gegenüber der ersten Induktorspule (512) unterschiedliche Windungszahl aufweist, und
eine Steuerung (527), wobei die Steuerung (527) zum Antrieb der ersten Induktorspule (512) und der zweiten Induktorspule (522) ausgelegt ist,
wobei das Verfahren Folgendes umfasst:
Antreiben der ersten Induktorspule (512) mit einem ersten pulsweitenmodulierten Wechselsignal zum Erzeugen eines ersten magnetischen Wechselfelds zum Erwärmen eines ersten Abschnitts der Suszeptoranordnung (540),
Antreiben der zweiten Induktorspule (522) mit einem zweiten pulsweitenmodulierten Wechselsignal zum Erzeugen eines zweiten magnetischen Wechselfelds zum Erwärmen eines zweiten Abschnitts der Suszeptoranordnung (540),
Bereitstellen des ersten pulsweitenmodulierten Wechselsignals mit einem Tastverhältnis, das komplementär zu dem Tastverhältnis des zweiten pulsweitenmodulierten Wechselsignals ist,
wobei das erste pulsweitenmodulierte Wechselsignal an die erste Induktorspule (512) während einer ersten Phase zur Erhöhung der Temperatur des ersten Abschnitts der Suszeptoranordnung (540) von einer Anfangstemperatur auf eine erste Betriebstemperatur bereitgestellt wird, wobei das erste pulsweitenmodulierte Wechselsignal während der ersten Phase mit einem Tastverhältnis von mehr als 50 %, bevorzugt mehr als 60 %, bevorzugt mehr als 70 %, stärker bevorzugt mehr als 80 % und am meisten bevorzugt mehr als 90 %, bereitgestellt wird, und
wobei das erste pulsweitenmodulierte Wechselsignal an die erste Induktorspule (512) während einer zweiten Phase zur Senkung der Temperatur des ersten Abschnitts der Suszeptoranordnung (540) von der ersten Betriebstemperatur auf eine zweite Betriebstemperatur bereitgestellt wird, wobei das erste pulsweitenmodulierte Wechselsignal während der zweiten Phase mit einem Tastverhältnis von weniger als 50 %, bevorzugt weniger als 40 %, bevorzugt weniger als 30 %, stärker bevorzugt weniger als 20 % und am meisten bevorzugt weniger als 10 %, bereitgestellt wird.

13. Verfahren nach Anspruch 12, wobei das zweite pulsweitenmodulierte Wechselsignal an die zweite Induktorspule (522) während der ersten Phase zur Erhöhung der Temperatur des zweiten Abschnitts der Suszeptoranordnung (540) von einer Anfangstemperatur auf eine dritte Betriebstemperatur bereitgestellt wird, wobei das zweite pulsweitenmodulierte Wechselsignal während der ersten Phase mit einem Tastverhältnis von weniger als 50 %, bevorzugt weniger als 40 %, bevorzugt weniger als 30 %, stärker bevorzugt weniger als 20 % und am meisten bevorzugt weniger als 10 %, bereitgestellt wird.

14. Verfahren nach Anspruch 13, wobei das zweite pulsweitenmodulierte Wechselsignal an die zweite Induktorspule (522) während der zweiten Phase zur Erhöhung der Temperatur des zweiten Abschnitts der Suszeptoranordnung (540) von der dritten Betriebstemperatur auf eine vierte Betriebstemperatur bereitgestellt wird, wobei das zweite pulsweitenmodulierte Wechselsignal während der zweiten Phase mit einem Tastverhältnis von mehr als 50 %, bevorzugt mehr als 60 %, bevorzugt mehr als 70 %, stärker bevorzugt mehr als 80 % und am meisten bevorzugt mehr als 90 %, bereitgestellt wird.

15. Aerosolerzeugungssystem, umfassend eine Aerosolerzeugungsvorrichtung (602) nach einem der Ansprüche 1 bis 11 und einen aerosolerzeugenden Artikel (700), der ein aerosolbildendes Substrat (702) umfasst.

## Revendications

1. Dispositif de génération d'aérosol (602) comprenant :
un agencement de chauffage par induction (501) configuré pour chauffer un substrat formant aérosol (702), l'agencement de chauffage par induction (501) comprenant :
un agencement de suscepteur (540) qui peut être chauffé par pénétration avec un champ magnétique variable pour chauffer le substrat formant aérosol (702),
au moins une première bobine d'induction (512), et
au moins une deuxième bobine d'induction (522), dans lequel la deuxième bobine d'induction (522) a un nombre de spires différent de celui de la première bobine d'induction (512), et
un dispositif de commande (527),
dans lequel le dispositif de commande (527) est configuré pour exciter la première bobine d'induction (512) avec un premier signal alternatif modulé en largeur d'impulsion pour générer un premier champ magnétique alternatif pour chauffer une première portion de l'agencement de suscepteur (540),
dans lequel le dispositif de commande (527) est configuré pour exciter la deuxième bobine d'induction (522) avec un deuxième signal alternatif modulé en largeur d'impulsion pour générer un deuxième champ magnétique alternatif pour chauffer une deuxième portion de l'agencement de suscepteur (540),
dans lequel le dispositif de commande (527) est configuré pour fournir le premier signal alternatif modulé en largeur d'impulsion et le deuxième signal alternatif modulé en largeur d'impulsion avec des cycles opératoires complémentaires,
dans lequel le dispositif de commande (527) est configuré pour fournir le premier signal alternatif modulé en largeur d'impulsion à la première bobine d'induction (512) pendant une première phase pour augmenter la température de la première portion de l'agencement de suscepteur (540) depuis une température initiale jusqu'à une première température de fonctionnement, dans lequel le dispositif de commande (527) est configuré pour fournir le premier signal alternatif modulé en largeur d'impulsion pendant la première phase avec un cycle opératoire supérieur à 50 %, de préférence supérieur à 60 %, de préférence supérieur à 70 %, de manière davantage préférée supérieur à 80 % et le plus préférentiellement supérieur à 90 %, et
dans lequel le dispositif de commande (527) est configuré pour fournir le premier signal alternatif modulé en largeur d'impulsion à la première bobine d'induction (512) pendant une deuxième phase pour diminuer la température de la première portion de l'agencement de suscepteur (540) depuis la première température de fonctionnement jusqu'à une deuxième température de fonctionnement, dans lequel le dispositif de commande (527) est configuré pour fournir le premier signal alternatif modulé en largeur d'impulsion pendant la deuxième phase avec un cycle opératoire inférieur à 50 %, de préférence inférieure à 40 %, de préférence inférieur à 30 %, de manière davantage préférée inférieur à 20 % et le plus préférentiellement inférieur à 10 %.

2. Dispositif de génération d'aérosol (602) selon la revendication 1, dans lequel le dispositif de commande (527) est configuré pour fournir le deuxième signal alternatif modulé en largeur d'impulsion à la deuxième bobine d'induction (522) pendant la première phase pour augmenter la température de la deuxième portion de l'agencement de suscepteur (540) depuis une température initiale jusqu'à une troisième température de fonctionnement, inférieure à la première température de fonctionnement, dans lequel le dispositif de commande (527) est configuré pour fournir le deuxième signal alternatif modulé en largeur d'impulsion pendant la première phase avec un cycle opératoire inférieur à 50 %, de préférence inférieur à 40 %, de préférence inférieur à 30 %, de manière davantage préférée inférieur à 20 % et le plus préférentiellement inférieur à 10 %.

3. Dispositif de génération d'aérosol (602) selon la revendication 2, dans lequel le dispositif de commande (527) est configuré pour fournir le deuxième signal alternatif modulé en largeur d'impulsion à la deuxième bobine d'induction (522) pendant la deuxième phase pour augmenter la température de la deuxième portion de l'agencement de suscepteur (540) depuis la troisième température de fonctionnement jusqu'à une quatrième température de fonctionnement, supérieure à la deuxième température de fonctionnement, dans lequel le dispositif de commande (527) est configuré pour fournir le deuxième signal alternatif modulé en largeur d'impulsion pendant la deuxième phase avec un cycle opératoire supérieur à 50 %, de préférence supérieur à 60 %, de préférence supérieur à 70 %, de manière davantage préférée supérieur à 80 % et le plus préférentiellement supérieur à 90 %.

4. Dispositif de génération d'aérosol (602) selon l'une quelconque des revendications précédentes, dans lequel le dispositif de génération d'aérosol (602) comprend en outre une alimentation électrique (532) pour fournir de la puissance à l'agencement de chauffage par induction (501).

5. Dispositif de génération d'aérosol (602) selon l'une quelconque des revendications précédentes, dans lequel le dispositif de commande (527) comprend un microcontrôleur.

6. Dispositif de génération d'aérosol (602) selon la revendication 5, dans lequel le microcontrôleur est configuré pour utiliser la fréquence d'horloge du microcontrôleur comme l'une ou les deux parmi la fréquence alternative du premier signal alternatif modulé en largeur d'impulsion et du deuxième signal alternatif modulé en largeur d'impulsion.

7. Dispositif de génération d'aérosol (602) selon l'une quelconque des revendications 1 à 5, dans lequel le dispositif de génération d'aérosol (602), de préférence le dispositif de commande (527), comprend en outre un oscillateur (530) destiné à générer l'une ou les deux parmi la fréquence alternative du premier signal alternatif modulé en largeur d'impulsion et du deuxième signal alternatif modulé en largeur d'impulsion.

8. Dispositif de génération d'aérosol (602) selon l'une quelconque des revendications précédentes, dans lequel le dispositif de génération d'aérosol (602) comprend en outre un premier étage de puissance, le premier étage de puissance comprenant au moins la première bobine d'induction (512) et un premier condensateur (514).

9. Dispositif de génération d'aérosol (602) selon la revendication 8, dans lequel la première bobine d'induction (512) et le premier condensateur (514) sont agencés sous la forme d'un premier circuit LC (510).

10. Dispositif de génération d'aérosol (602) selon l'une quelconque des revendications précédentes, dans lequel le dispositif de génération d'aérosol (602) comprend en outre un deuxième étage de puissance, le deuxième étage de puissance comprenant au moins la deuxième bobine d'induction (522) et un deuxième condensateur (524).

11. Dispositif de génération d'aérosol (602) selon la revendication 10, dans lequel la deuxième bobine d'induction (522) et le deuxième condensateur (524) sont agencés sous la forme d'un deuxième circuit LC (520).

12. Procédé de commande d'un dispositif de génération d'aérosol (602), le dispositif de génération d'aérosol (602) comprenant :
un agencement de chauffage par induction (501) configuré pour chauffer un substrat formant aérosol (702), l'agencement de chauffage par induction (501) comprenant :
un agencement de suscepteur (540) qui peut être chauffé par pénétration avec un champ magnétique variable pour chauffer le substrat formant aérosol (702),
au moins une première bobine d'induction (512), et
au moins une deuxième bobine d'induction (522), dans lequel la deuxième bobine d'induction (522) a un nombre de spires différent de celui de la première bobine d'induction (512), et
un dispositif de commande (527), dans lequel le dispositif de commande (527) est configuré pour exciter la première bobine d'induction (512) et la deuxième bobine d'induction (522),
le procédé comprenant :
l'excitation de la première bobine d'induction (512) avec un premier signal alternatif modulé en largeur d'impulsion pour générer un premier champ magnétique alternatif pour chauffer une première portion de l'agencement de suscepteur (540),
l'excitation de la deuxième bobine d'induction (522) avec un deuxième signal alternatif modulé en largeur d'impulsion pour générer un deuxième champ magnétique alternatif pour chauffer une deuxième portion de l'agencement de suscepteur (540),
la fourniture du premier signal alternatif modulé en largeur d'impulsion avec un cycle opératoire complémentaire au cycle opératoire du deuxième signal alternatif modulé en largeur d'impulsion,
dans lequel le premier signal alternatif modulé en largeur d'impulsion est fourni à la première bobine d'induction (512) pendant une première phase pour augmenter la température de la première portion de l'agencement de suscepteur (540) depuis une température initiale jusqu'à une première température de fonctionnement, dans lequel le premier signal alternatif modulé en largeur d'impulsion est fourni pendant la première phase avec un cycle opératoire supérieur à 50 %, de préférence supérieur à 60 %, de préférence supérieur à 70 %, de manière davantage préférée supérieur à 80 % et le plus préférentiellement supérieur à 90 %, et
dans lequel le premier signal alternatif modulé en largeur d'impulsion est fourni à la première bobine d'induction (512) pendant une deuxième phase pour diminuer la température de la première portion de l'agencement de suscepteur (540) depuis la première température de fonctionnement jusqu'à une deuxième température de fonctionnement, dans lequel le premier signal alternatif modulé en largeur d'impulsion est fourni pendant la deuxième phase avec un cycle opératoire inférieur à 50 %, de préférence inférieur à 40 %, de préférence inférieur à 30 %, de manière davantage préférée inférieur à 20 % et le plus préférentiellement inférieur à 10 %.

13. Procédé selon la revendication 12, dans lequel le deuxième signal alternatif modulé en largeur d'impulsion est fourni à la deuxième bobine d'induction (522) pendant la première phase pour augmenter la température de la deuxième portion de l'agencement de suscepteur (540) depuis une température initiale jusqu'à une troisième température de fonctionnement, dans lequel le deuxième signal alternatif modulé en largeur d'impulsion est fourni pendant la première phase avec un cycle opératoire inférieur à 50 %, de préférence inférieur à 40 %, de préférence inférieur à 30 %, de manière davantage préférée inférieur à 20 % et le plus préférentiellement inférieur à 10 %.

14. Procédé selon la revendication 13, dans lequel le deuxième signal alternatif modulé en largeur d'impulsion est fourni à la deuxième bobine d'induction (522) pendant la deuxième phase pour augmenter la température de la deuxième portion de l'agencement de suscepteur (540) depuis la troisième température de fonctionnement jusqu'à une quatrième température de fonctionnement, dans lequel le deuxième signal alternatif modulé en largeur d'impulsion est fourni pendant la deuxième phase avec un cycle opératoire supérieur à 50 %, de préférence supérieur à 60 %, de préférence supérieur à 70 %, de manière davantage préférée supérieur à 80 % et le plus préférentiellement supérieur à 90 %.

15. Système de génération d'aérosol comprenant un dispositif de génération d'aérosol (602) selon l'une quelconque des revendications 1 à 11 et un article de génération d'aérosol (700) comprenant un substrat formant aérosol (702).
